# EUROPÄISCHE PATENTSCHRIFT

(11) **EP 2 587 125 B1**
(45) Veröffentlichungstag und Bekanntmachung des Hinweises auf die Patenterteilung: **25.11.2020**
(21) Anmeldenummer: 12189199.8
(22) Anmeldetag: 19.10.2012
(51) Int. Cl.: F21S 41/143, F21S 41/24, F21S 41/26, F21S 41/275, F21S 41/25, F21S 41/663, F21V 5/00, G02B 5/02, G02B 3/00

(54) **Scheinwerferprojektionsmodul für ein Kraftfahrzeug**
Headlamp projection module for a motor vehicle
Module de projection de phare pour un véhicule automobile

(30) Priorität: 27.10.2011 DE 102011085315
(43) Veröffentlichungstag der Anmeldung: 01.05.2013
(73) Patentinhaber: Automotive Lighting Reutlingen GmbH, 72762 Reutlingen (DE)
(72) Erfinder: Stefanov, Emil P., 72762 Reutlingen (DE); Kiesel, Markus, 72762 Reutlingen (DE); Rosenhahn, Ernst-Olaf, 72411 Bodelshausen (DE)
(74) Vertreter: DREISS Patentanwälte PartG mbB

(56) Entgegenhaltungen:
- EP-A1- 1 980 787
- WO-A1-2012/034936
- DE-A1-102008 005 488
- DE-A1-102008 023 551
- DE-B3-102009 053 581
- DE-U1-202005 004 080
- US-A1- 2005 225 999

## Beschreibung

Die vorliegende Erfindung betrifft ein Scheinwerferprojektionsmodul für ein Kraftfahrzeug nach dem Oberbegriff des Anspruchs 1. Ein solches Scheinwerferprojektionsmodul ist aus der DE 10 2008 005 488 A1 bekannt.

Neuartige Projektionsscheinwerfer werden heutzutage überwiegend mit Halbleiterlichtquellen, insbesondere Leuchtdioden (LEDs), als Lichtquellen gebaut. Leuchtdioden generieren - zumindest derzeit noch - keine hohen Leuchtdichtewerte, wie es beispielsweise bei Hochdruck-Gasentladungslampen der Fall ist. Dafür sind Leuchtdioden in einem ausgedehnten Dynamikbereich steuerbar und erzeugen Licht bei deutlich niedrigeren Betriebstemperaturen. Ihre niedrige Betriebstemperatur ist ein entscheidender Vorteil gegenüber herkömmlichen Lichtquellen, wie bspw. Gasentladungslampen und Glühlampen. So können bei LED-Projektionsscheinwerfern lichttechnische Maßnahmen zur Bündelung des Lichts in unmittelbarer Nähe zur Lichtquelle vorgenommen werden. Im modernen Scheinwerferbau können und werden aufgrund der niedrigeren Temperaturen immer mehr Kunststoffe eingesetzt, statt Metall, Glas oder Keramik. Damit ist es zum einen möglich, neuartige und deutlich komplexere optische Ansätze zu realisieren. Zum anderen ist das Gewicht und der erforderliche Platzbedarf klein und - trotz der Komplexität und trotz einer deutlich höheren Anzahl diskreter LED-Lichtquellen - vergleichbar mit konventionellen Lösungen.

Ein Beispiel für ein derartiges modernes Scheinwerfermodul ist beispielsweise aus der DE 10 2009 053 581 B3 bekannt. Bei dem dort offenbarten Scheinwerfermodul umfasst die Lichtquelle mehrere matrixartig neben- und übereinander angeordnete Halbleiterlichtquellen, beispielsweise Leuchtdioden (LED-Array). Dementsprechend weist die Primäroptik mehrere matrixartig neben- und übereinander angeordnete Lichtleiter auf (Lichtleiter-Array), wobei jedem Lichtleiter mindestens eine Leuchtdiode des LED-Arrays zugeordnet ist. Jeder Lichtleiter weist eine einer Leuchtdiode zugewandte Lichteintrittsfläche, eine in Lichtaustrittsrichtung gerichtete Lichtaustrittsfläche und zwischen der Lichteintrittsfläche und der Lichtaustrittsfläche ausgebildete totalreflektierende Seitenflächen auf. Zur Homogenisierung der aus der Primäroptik austretenden Lichtstrahlen und zur Erzielung einer möglichst homogenen Lichtverteilung vor dem Kraftfahrzeug, wird vorgeschlagen, in Lichtaustrittsrichtung nach der Primäroptik optisch wirksame Austrittsoptiken vorzusehen. Das aus der Primäroptik ausgekoppelte und durch die Austrittsoptiken hindurch getretene Licht wird dann über eine Sekundäroptik, beispielsweise in Form einer Projektionslinse, vor das Kraftfahrzeug projiziert.

Leuchtdioden sind stark divergente Lichtquellen und decken mit den durch sie ausgesandten Lichtstrahlen einen großen Raumwinkel ab. Um ihr Licht effizient nutzen zu können, ist es erforderlich, den Lichtfluss in Lichtaustrittsrichtung, das heißt in Richtung der Fahrbahn vor dem Kraftfahrzeug, zu bündeln. Je eher dies geschieht, bevor der Querschnitt zu groß wird, desto kleiner können die dafür erforderlichen Flächen beziehungsweise Primäroptiken ausgebildet werden, aber desto näher müssen diese auch an den Leuchtdioden platziert werden. Bei Leuchtdioden ist dies aufgrund der relativ geringen Betriebstemperaturen möglich, da sie in der Regel nicht heißer als maximal 110 °C bis 150 °C im Normalbetrieb werden beziehungsweise werden dürfen, um eine ordnungsgemäße Funktion der Leuchtdioden sicherstellen zu können.

Bei dem aus der DE 10 2009 053 581 B3 bekannten Scheinwerfermodul erfolgt die erste Bündelungsmaßnahme bereits unmittelbar nach der Leuchtdioden-Oberfläche über einen minimalen Luftspalt und durch Lichtbrechung an den Lichtleiter-Einkoppelflächen, die den Leuchtdioden jeweils zugeordnet sind. Der weitere Verlauf wird von mehrfacher Totalreflexion an den speziell geformten LichtleiterSeitenwänden charakterisiert. Somit wird an den Lichtaustrittsflächen der Primäroptik eine örtliche Lichtverteilung erzeugt, die strengen lichttechnischen Anforderungen genügt und von der Sekundäroptik auf die Fahrbahn projiziert wird. Dabei wird im Allgemeinen von einer kreisrunden Lichteintrittsfläche der Sekundäroptik ausgegangen, wie beispielsweise in Figur 1 der DE 10 2009 053 581 B3 dargestellt.

Hier wird eine besonders wichtige Anforderung an die von der Primäroptik geformte und von der Sekundäroptik abgebildete Lichtverteilung gestellt: Die Primäroptik-Winkelapertur muss an den Sekundäroptik-Akzeptanzwinkel angepasst sein, damit die gezielt geformten Primäroptik-Lichtanteile vollständig von der Sekundäroptik erfasst werden können. Sonst würden Lichtanteile die Sekundäroptik nicht treffen und demnach nicht zur Lichtverteilung auf der Fahrbahn beitragen. Die Übertragungseffizienz des optischen Systems und die gewünschte Lichtverteilung würden dadurch beeinträchtigt. Aus diesem Grund sind die Lichtaustrittflächen der Primäroptik bei dem aus der DE 10 2009 053 581 B3 bekannten Scheinwerfermodul vorzugsweise konvex gewölbt ausgelegt.

Weitere Anforderungen an die Ausgestaltung der Primäroptik sind mit den Winkelausdehnungen einzelner auf die Fahrbahn projizierter Teilbereiche (Pixel) der resultierenden Lichtverteilung aus Sicht des Fahrers verbunden. So sollten die abgebildeten Pixel zum Beispiel Winkelbreiten von nur wenigen Grad (zum Beispiel 1°) haben. Die vertikalen Winkelausdehnungen der abgebildeten Pixel sind nur wenig größer. Dadurch kann durch gezieltes Ansteuern einer oder mehrerer Leuchtdioden des Scheinwerfermoduls die resultierende Lichtverteilung besonders fein und genau variiert werden, beispielsweise zur Realisierung einer Teilfernlichtfunktion oder einer Markierungslichtfunktion. Bei der Teilfernlichtfunktion werden durch gezieltes deaktivieren einzelner Leuchtdioden diejenigen Bereich der resultierenden Lichtverteilung abgedunkelt, in denen andere Verkehrsteilnehmer detektiert wurden. Bei dem Markierungslicht werden durch gezieltes Aktivieren einzelner Leuchtdioden vor dem Fahrzeug detektierte Objekte gezielt angestrahlt, um den Fahrer des Fahrzeugs darauf aufmerksam zu machen.

Entsprechend der Etendue-Erhaltung in einem verlustfreien optischen System ist das Produkt aus ausgeleuchteter Fläche und Öffnungswinkel eine konstante Größe. Folglich kann eine Lichtdurchtrittsfläche, wie beispielsweise die Lichtaustrittsfläche der Primäroptik, quer zur Richtung ihrer größten Ausdehnung am stärksten bündeln. Da Leuchtdioden eine Nähe zur Lambert'schen Lichtverteilung aufweisen und die horizontale Ausdehnung der Primäroptik-Lichtaustrittsflächen kleiner ist als die vertikale Ausdehnung, besitzt das Primäroptik-Lichtaustrittsbündel einen relativ großen horizontalen Öffnungswinkel. Da die vertikale Ausdehnung der Primäroptik-Auskoppeloptiken größer ist, gilt umgekehrt, dass der vertikale Öffnungswinkel des ausgekoppelten Lichtbündels kleiner ausfällt. Das führt in gewissen Grenzen dazu, dass der Querschnitt des die Sekundäroptik durchlaufenden Lichtbündels eine größere horizontale als vertikale Ausdehnung aufweist. Dazu kommt noch, dass im Allgemeinen der Bündelquerschnitt so klein wie möglich gehalten werden sollte, um von der höheren Abbildungsqualität eines achsennäheren optischen Strahlengangs profitieren zu können. Im Falle einer ideal ausgeleuchteten kreisrunden Sekundäroptik muss das Primäroptik-Lichtbündel also zwangsläufig einen in etwa gleichgroßen kreisrunden Querschnitt beim Eintritt in die Sekundäroptik aufweisen.

Generell weichen jedoch bei neueren Scheinwerferprojektionsmodulen die Sekundäroptiken aus Design- und/oder Platzgründen von einem kreisrunden Querschnitt ab. Die aus optischen Gründen vorteilhafte kreisrunde Form wird aufgegeben und zum Beispiel durch eine langgezogene Form, sogar durch eine rechteckige oder ähnliche Form ersetzt, die sogar in einer Vertikalebene zur Horizontalen verkippt sein kann, so dass sich eine RhombusForm ergibt.

Aus der DE 10 2008 005 488 A1 ist ein Scheinwerferprojektionsmodul mit LED-Lichtquellen bekannt, wobei im Strahlengang eine Feinstrukturfläche mit einer Mehrzahl von in einer Vorzugsrichtung verlaufenden Strukturelementen angeordnet ist. Die Strukturfläche kann auf einer separaten Platte oder auf einer Lichtaustrittsfläche eines Primäroptikelements ausgebildet sein. Die DE 10 2008 023 551 A1 offenbart ein Scheinwerferprojektionsmodul mit LED-Lichtquellen, wobei auf einer Lichtaustrittsfläche einer Sekundäroptik eine Mikrostruktur ausgebildet ist.

Ausgehend von dem beschriebenen Stand der Technik liegt der vorliegenden Erfindung die Aufgabe zugrunde, eine beschnitte, von der kreisrunden Querschnittsform abweichende Lichtdurchtrittsfläche einer Sekundäroptik möglichst vollständig und gemäß einer vorgegebenen Intensitätsverteilung, insbesondere möglichst homogen, auszuleuchten.

Zur Lösung dieser Aufgabe wird ausgehend von dem Scheinwerferprojektionsmodul der eingangs genannten Art ein Scheinwerferprojektionsmodul gemäß Anspruch 1 definiert. In einer virtuellen Objektlage der Sekundäroptik, d.h. einer von der Primäroptik generierten Lichtverteilung, wird eine optisch wirksame, Licht brechende Mikrostruktur im Strahlengang des gebündelten Lichts angeordnet, wobei die Mikrostruktur Abmessungen der funktionsbestimmenden Strukturelemente, insbesondere Höhenunterschiede der Strukturelemente, im Bereich mehrerer 10⁻⁶ m aufweist und wobei - die optisch wirksame Struktur in **der** Objektebene der Sekundäroptik (14) angeordnet oder ausgebildet ist, die von **der Sekundäroptik (14)** auf die Fahrbahn projiziert wird. Die Breite der einzelnen Strukturelemente liegt vorzugsweise im Bereich mehrerer 10⁻³ m.

Die vorliegende Erfindung ermöglicht es, eine Sekundäroptik mit einer kreisförmigen oder nicht kreisförmigen Querschnittsfläche mit minimalem Effizienzverlust des gesamten optischen Systems in einer gewünschten Weise auszuleuchten. Mit der Erfindung wird das von der Primäroptik gebündelte Licht über eine möglichst große Lichtdurchtrittsfläche der Sekundäroptik verteilt. Insbesondere werden die von der Primäroptik erzeugten Lichtbündel zumindest teilweise auch in Bereiche außerhalb einer kreisförmigen Lichtdurchtrittsfläche gelenkt. Durch
die großflächige Ausleuchtung der Sekundäroptik ergibt sich ein neuartiges Design und eine größere Kundenakzeptanz.

Die Lichtdurchtrittsfläche durch die Sekundäroptik kann nahezu beliebig geformt werden. Ferner kann durch die Mikrostruktur die Intensitätsverteilung innerhalb der Lichtdurchtrittsfläche nahezu beliebig variiert werden. Vorzugsweise wird versucht, die gesamte Lichtdurchtrittsfläche der Sekundäroptik möglichst homogen auszuleuchten. Selbstverständlich ist es auch denkbar, die Lichtdurchtrittsfläche der Sekundäroptik nach anderen Vorgaben auszuleuchten. Die Erfindung stellt sowohl Designtechnisch als auch optisch und lichttechnisch einen deutlichen Vorteil gegenüber den aus dem Stand der Technik bekannten Scheinwerferprojektionsmodulen dar. Der erfindungsgemäß vorgeschlagene Ansatz erschließt für den Betrachter von außerhalb des Scheinwerfers wahrnehmbar neuartige, gestalterische Freiräume des gesamten optischen Systems.

Mit Hilfe der Mikrostrukturen können die aus der Primäroptik austretenden Lichtbündel derart in nahezu beliebigen Richtungen zur Sekundäroptik hin gebrochen werden, dass sich die Form und die Intensitätsverteilung der sich auf der Lichteintrittsfläche der Sekundäroptik ergebenden Lichtverteilung der Primäroptik nahezu beliebig variieren lassen. So können nahezu beliebig geformte Lichtdurchtrittsflächen von Sekundäroptiken ausgeleuchtet werden. Zusätzlich können außerhalb der kreisrunden Fläche hinzugefügte optisch unvorteilhafte Designbereiche am Rand der Sekundäroptik gleichmäßig ausgeleuchtet werden. Insbesondere ist an das Ausleuchten von rechteckigen oder Rhombus-förmigen Lichtdurchtrittsflächen bzw. Sekundäroptiken gedacht. Ferner lässt sich dadurch die Intensitätsverteilung innerhalb der Lichtdurchtrittsfläche in hohem Maße variieren. Insbesondere ist an eine homogene Ausleuchtung der Lichtdurchtrittsfläche gedacht. Dies alles ist ohne eine beträchtliche Verschlechterung der Abbildungsqualität und der Lichtübertragungseffizienz des optischen Systems möglich. Die vorliegende Erfindung umfasst selbstverständlich auch solche Scheinwerfermodule, bei denen die optisch wirksame, lichtbrechende Struktur nicht exakt in der virtuellen Objektebene der Primäroptik, sondern lediglich in unmittelbarer Nähe der virtuellen Objektlage der von der Primäroptik generierten Lichtverteilung angeordnet ist. Die sich in dieser Objektlage ergebende Lichtverteilung wird durch die Sekundäroptik in vergrößerter Form als resultierende Lichtverteilung oder als ein Teil der resultierenden Lichtverteilung auf der Fahrbahn vor dem Fahrzeug abgebildet. Die virtuelle Objektlage der von der Primäroptik erzeugten Lichtverteilung liegt also im Wesentlichen in der Objektebene der Sekundäroptik. Ein Abbild dieser von der Primäroptik erzeugten Lichtverteilung wird durch die Sekundäroptik zur Erzeugung der resultierenden Lichtverteilung vor das Kraftfahrzeug projiziert.

Durch die optisch wirksame Struktur wird die örtliche Lichtverteilung nicht beziehungsweise allenfalls in ganz geringem Maße geändert. Das heißt, dass die durch das Projektionsmodul mit in der Objektebene angeordneter Mikrostruktur erzeugte, sich vor dem Fahrzeug ergebende resultierende Lichtverteilung im Wesentlichen gleich der Lichtverteilung ist, die sich mit dem Projektionsmodul ohne Mikrostruktur ergeben würde. Die optisch wirksame Struktur modifiziert lediglich die örtliche Primäroptik-Auskoppelrichtung und streut die aus der Primäroptik austretenden Lichtstrahlen, so dass sie die Sekundäroptik unter Umständen bzw. zumindest teilweise an anderer Stelle passieren als ohne Mikrostruktur. Insbesondere führt die Mikrostruktur zu einem Aufweiten des Öffnungswinkels des Lichtbündels, wobei je nach Ausgestaltung der Mikrostruktur ein Aufweiten in vertikaler und/oder horizontaler Richtung erfolgen kann. Die resultierende örtliche Lichtverteilung ändert sich dadurch jedoch nicht.

Somit bleibt die von dem Projektionsmodul erzeugte resultierende Lichtverteilung trotz der optisch wirksamen Struktur weitgehend unverändert, lediglich die Richtung der von der Primäroptik erzeugten Lichtbündel wird durch die optisch wirksame Struktur verändert, sodass die modifizierten Lichtbündel auf vorgegebene Bereiche der Lichteinkoppelfläche der Sekundäroptik treffen und die Lichtbündel eine Lichtdurchtrittsfläche der Sekundäroptik mit vorgegebener Form durchlaufen. Vorzugsweise wird die örtliche Primäroptik-Auskoppelrichtung derart modifiziert, dass eine vorgegebene, beispielsweise homogene Ausleuchtung der Sekundäroptik gewährleistet ist. In der durch die Sekundäroptik auf die Fahrbahn projizierten resultierenden Lichtverteilung tritt die örtliche Modifikation der Primäroptik-Auskoppelrichtung nicht oder nahezu nicht in Erscheinung. Die Form und die Abmessung der Lichtverteilung bleibt weitgehend unverändert.

Die optisch wirksame Struktur ändert also lediglich die Lichtausbreitungsrichtung zwischen der Primäroptik und der Sekundäroptik derart, dass keine oder allenfalls sehr geringe Effizienzverluste entstehen. Das bedeutet, dass vorzugsweise die gesamten, quer zur Ausbreitungsrichtung gestreckten Lichtbündel auf die Sekundäroptik auftreffen und somit zur Erzeugung der resultierenden Lichtverteilung auf die Fahrbahn vor dem Kraftfahrzeug genutzt werden können. Da dabei eine stärkere Durchmischung der Lichtstrahlen zwischen Primäroptik und Sekundäroptik als bisher stattfindet, trägt die optisch wirksame Struktur auch zur Verbesserung der Farbhomogenität, also zur Unterdrückung von Farbanhäufungen durch Lichtdispersionseffekte an den ursprünglich glatten Primäroptik-Austrittsflächen bei.

Die optisch wirksame Struktur ist als eine Mikrostruktur mit Abmessungen der funktionsbestimmenden Strukturen, insbesondere der Höhenunterschiede der einzelnen Strukturelement, im Mikrometerbereich ausgebildet. Die Modulationsstruktur im Mikrometerbereich bewirkt eine Streuung des hindurchtretenden Lichts aufgrund von Lichtbrechung. Die Streuung führt jedoch zu keiner Änderung der örtlichen Lichtverteilung, sondern lediglich zu einer Modifikation der örtlichen Primäroptik-Auskoppelrichtung oder der richtungsunabhängigen Lichtverteilung.

Gemäß einer vorteilhaften Weiterbildung der vorliegenden Erfindung wird vorgeschlagen, dass die optisch wirksame Struktur als eine eindimensionale Wellenstruktur mit mehreren Wellen ausgebildet ist, wobei Wellenberge und Wellentäler der Wellen durch zylindrische oder quasi-zylindrische Abschnitte gebildet sind und wobei Längsachsen der zylindrischen oder quasi-zylindrischen Abschnitte parallel zueinander verlaufen. Es ist denkbar, dass die zylindrischen oder quasi-zylindrischen Abschnitte die gleichen oder unterschiedliche Radien aufweisen.

Alternativ wird vorgeschlagen, dass die optisch wirksame Struktur als eine zweidimensionale Wellenstruktur mit einer ersten Gruppe von Wellen und einer zweiten Gruppe von Wellen ausgebildet ist, wobei Wellenberge und Wellentäler der Wellen durch zylindrische oder quasi-zylindrische Abschnitte gebildet sind, wobei Längsachsen der zylindrischen oder quasi-zylindrischen Abschnitte der ersten Gruppe von Wellen parallel zueinander verlaufen und Längsachsen der zylindrischen oder quasi-zylindrischen Abschnitte der zweiten Gruppe von Wellen parallel zueinander verlaufen, und wobei die Längsachsen der ersten Gruppe von Wellen und der zweiten Gruppe von Wellen in einem Winkel ungleich Null Winkelgrad zueinander ausgerichtet sind. Es ist denkbar, dass die zylindrischen oder quasi-zylindrischen Abschnitte innerhalb einer Gruppe von Wellen die gleichen oder unterschiedliche Radien aufweisen. Die Wellen der ersten Gruppe und die Wellen der zweiten Gruppe überlagern sich bei der zweidimensionalen Wellenstruktur, sodass sich eine Berg-und-Tal-Modulationsstruktur ergibt. Vorzugsweise liegt der Winkel zwischen den Längsachsen der ersten Gruppe von Wellen und der zweiten Gruppe von Wellen in einem Bereich zwischen 10 Grad und 80 Grad.

Durch die Steilheit der Berg-und-Tal-Modulation kann auch eine andere als eine kreisförmige, rechteckige oder rhombenförmige Lichtverteilung auf der Lichtaustrittsfläche der Primäroptik modelliert werden, zum Beispiel eine ring-, tropfen- oder nierenförmige Verteilung. Diese modellierten Lichtverteilungen der Lichtbündel treffen dann auf die Lichteinkoppelfläche der Sekundäroptik und durchlaufen die Sekundäroptik in einer entsprechend geformten Lichtdurchtrittsfläche. Vorzugsweise ist die Sekundäroptik entsprechend der Form und den Abmessungen der Lichtdurchtrittsfläche geformt und ausgebildet. Die optisch wirksame Struktur ist derart ausgestaltet, dass sie die durch die Primäroptik erzeugten Lichtbündel so umlenkt, dass sie eine beliebig geformte Lichteinkoppelfläche der Sekundäroptik beziehungsweise einer vorgegebenen Form der Lichtdurchtrittsfläche der Sekundäroptik in vorgegebener Weise, bspw. möglichst homogen, ausleuchten. Durch die Mikro-Modulationsstruktur bieten sich also zusätzliche gestalterische Freiheiten an.

Selbstverständlich ist es denkbar, dass die optisch wirksame Struktur auch anders als die beschriebene ein- beziehungsweise zweidimensionale Wellenstruktur ausgebildet ist. Insbesondere ist es denkbar, die Struktur als eine Freiformstruktur auszugestalten, wobei bestimmte Bereiche der Struktur jeweils zur Erzielung eines gewünschten Effekts in entsprechender Weise ausgestaltet sind. Auf diese Weise könnte eine Effizienzsteigerung des gesamten optischen Systems erzielt werden, da zumindest ein Teil der aus der Primäroptik ausgetretenen Lichtbündel durch die entsprechenden Bereiche der optisch wirksamen Struktur optimal auf vorgegebene Bereiche der Lichteinkoppelfläche der Sekundäroptik gelenkt werden könnte.

Ferner ist es denkbar, nicht alle von der Primäroptik erzeugten Lichtbündel mittels der Mikrostruktur zu modifizieren, sondern nur einige davon. Es wird also nicht mehr das gesamte, von der Primäroptik ausgekoppelte Licht geformt und abgelenkt, sondern nur ein Teil davon. Auch auf diese Weise kann das von der Primäroptik gebündelte Licht besonders genau und mit hoher Auflösung in gewünschter Weise, beispielsweise möglichst homogen, auf die gesamte Lichteinkoppelfläche der Sekundäroptik verteilt werden.

Gemäß einer anderen bevorzugten Ausführungsform der vorliegenden Erfindung wird vorgeschlagen, dass die optisch wirksame Struktur derart ausgerichtet ist, dass die Längsachsen der Wellen in einer Vertikalebene (im Wesentlichen senkrecht zur Lichtausbreitungsrichtung) und schräg bezüglich einer Horizontalebene des Projektionsmoduls in einem in ein Kraftfahrzeug eingebauten Zustand verlaufen. Dadurch kann eine rechteckige oder rhombenförmige Lichteinkoppelfläche der Sekundäroptik besonders gut, vor allem besonders homogen, ausgeleuchtet werden. Mehrere jeweils rechteckige oder rhombenförmige Einzellichtbündel können durch die Sekundäroptik mit ebenfalls Rechteck- oder Rhombenform als eine resultierenden Gesamtlichtverteilung auf die Fahrbahn projiziert werden.

Die Lichtquelle des erfindungsgemäßen Scheinwerfermoduls kann in beliebiger Weise ausgestaltet sein. So ist es beispielsweise denkbar, dass die Lichtquelle eine Gasentladungslampe oder eine Glühlampe umfasst. Besonders bevorzugt ist jedoch, wenn die Lichtquelle mindestens eine Halbleiterlichtquelle, insbesondere eine Leuchtdiode, umfasst. Gemäß einer besonders bevorzugten Weiterbildung der vorliegenden Erfindung wird vorgeschlagen, dass die Lichtquelle mehrere in einer Reihe oder Spalte neben- oder übereinander oder matrixartig neben- und übereinander angeordnete Halbleiterlichtquellen, insbesondere Leuchtdioden, umfasst. Eine solche Lichtquelle wird auch als LED-Array bezeichnet. Die neben- beziehungsweise übereinander angeordneten Leuchtdioden können auf einem gemeinsamen oder auf mehreren separaten Trägerelementen angeordnet sein. Das oder die Trägerelemente sind beispielsweise als eine Leiterplatte (printed circuit board, PCB) ausgebildet, auf der Leiterbahnen, aktive und passive elektrische und elektronische Bauelemente angeordnet sein können, die zur elektrischen Energieversorgung der Leuchtdioden und/oder zu deren Ansteuerung dienen. Ferner können die Leuchtdioden entweder einen gemeinsamen Kühlkörper oder mehrere Kühlkörper nutzen. Die Leuchtdioden sind vorzugsweise über das Trägerelement auf einem Kühlkörper angeordnet. Weitere Mittel zur Verbesserung des Wärmeübergangs von den LEDs auf den Kühlkörper können zwischen dem Trägerelement und dem Kühlkörper ausgebildet bzw. angeordnet sein, beispielsweise in Form einer Wärmeleitpaste oder eines elektrisch ansteuerbaren Peltier-Elements.

Ferner wird vorgeschlagen, dass die Primäroptik einen Reflektor aufweist. Eine als Reflektor ausgebildete Primäroptik findet vorzugsweise in Scheinwerfermodulen Anwendung, wo die Lichtquelle eine Gasentladungslampe oder eine Glühlampe umfasst. Bei dieser Ausführungsform sind die optisch wirksamen Strukturen ebenfalls in oder in unmittelbarer Nähe der virtuellen Objektlage der von dem Reflektor generierten Lichtverteilung angeordnet.

Besonders bevorzugt ist es jedoch, wenn die Primäroptik mindestens einen Lichtleiter mit einer der Lichtquelle zugewandten Lichteintrittsfläche, einer in Lichtaustrittsrichtung gerichteten Lichtaustrittsfläche und zwischen der Lichteintrittsfläche und der Lichtaustrittsfläche ausgebildeten totalreflektierenden Seitenflächen aufweist. Insbesondere wird vorgeschlagen, dass die Primäroptik mehrere in einer Reihe oder Spalte neben- oder übereinander oder matrixartig neben- und übereinander angeordnete Lichtleiter jeweils mit einer der Lichtquelle zugewandten Lichteintrittsfläche, mit einer in Lichtaustrittsrichtung gerichteten Lichtaustrittsfläche und mit zwischen der Lichteintrittsfläche und der Lichtaustrittsfläche ausgebildeten totalreflektierenden Seitenflächen aufweist. Diese Ausführungsform ist insbesondere für Scheinwerfermodule interessant, bei denen die Lichtquelle mehrere matrixartig neben- und übereinander angeordnete Halbleiterlichtquellen, insbesondere Leuchtdioden, umfasst.

Die von einer Leuchtdiode ausgesandten Lichtstrahlen werden über die Lichteintrittsfläche in den der Leuchtdiode zugeordneten Lichtleiter eingekoppelt. Einem Lichtleiter kann auch mehr als eine LED zugeordnet sein. Die Leuchtdiode ist eine divergente Lichtquelle, das heißt sie strahlt ihr Licht in einem großen Raumwinkel ab. Deshalb ist es zur Erlangung eines guten Wirkungsgrades wichtig, dass die Lichteintrittsfläche der Primäroptik sehr nahe an der Leuchtdiode angeordnet ist. Dadurch trifft ein Großteil des von der Leuchtdiode ausgesandten Lichts, vorzugsweise das gesamte ausgesandte Licht, auf die Lichteintrittsfläche des Lichtleiters, wird in den Lichtleiter eingekoppelt und wird darin mittels Totalreflexion in Richtung Lichtaustrittsfläche propagiert. Es ist denkbar, dass vor der Lichteintrittsfläche eine TIR (total internal reflection)-Vorsatzoptik angeordnet ist oder dass die Lichteintrittsfläche selbst als eine TIR-Vorsatzoptik ausgebildet ist. Innerhalb der Lichtleiter erfahren die eingekoppelten Lichtstrahlen mehrere Reflexionen an den totalreflektierenden Seitenwänden. Bei der Reflexion werden die Lichtstrahlen im Lichtleiter aufgrund der nichtparallel verlaufenden Lichtleiterseitenwänden stärker gebündelt. Der Lichtleiter hat im Wesentlichen trichterförmig oder konisch zulaufende Seitenwände; die Querschnittsfläche des Lichtleiters nimmt also in Richtung der Lichtaustrittsfläche zu. Vorzugsweise haben die totalreflektierenden Seitenflächen eine geeignete Form, damit selbst stark divergente Lichtstrahlen auf ihrem Weg durch den Lichtleiter zur Lichtaustrittsfläche hin so umgelenkt werden, dass sie den Lichtleiter viel näher zur optischen Achse des Lichtleiters verlassen. Mit anderen Worten: Die Reflexionswinkel an den Lichtleiterwänden werden mit jeder Totalreflexion geringer und führen so zumindest für einen Hauptlichtfluss zu einer Bündelung der Lichtstrahlen in einer Hauptlichtaustrittsrichtung. Die totalreflektierenden Seitenflächen haben vorzugsweise keine Parabelform oder parabelähnliche Form. Totalreflexionen haben den großen Vorteil eines hohen Wirkungsgrads. Trotz mehrfacher Reflexionen wird kaum Lichtfluss aus den Lichtleitern ausgekoppelt außer an Oberflächendefekten oder an Oberflächenverschmutzungen absorbiert. Abgesehen von Fresnel-Verlusten beim Ein- und Austritt des Lichts, gibt es auf der Strecke entlang der Lichtleiter nahezu keine Absorptionsverluste, da das Lichtleitermaterial hochtransparent ist.

Es wird vorgeschlagen, dass die Lichtaustrittsfläche des mindestens einen Lichtleiters in der oder nahe der virtuellen Objektebene der Primäroptik liegt. Dabei ist es besonders vorteilhaft, wenn die optisch wirksame Struktur auf der Lichtaustrittsfläche des mindestens einen Lichtleiters ausgebildet ist. Alternativ wird vorgeschlagen, dass die optisch wirksame Struktur auf einem von dem mindestens einen Lichtleiter separaten transparenten Körper ausgebildet ist, der zwischen der Lichtaustrittsfläche des mindestens einen Lichtleiters und der Sekundäroptik angeordnet ist. Es ist denkbar, dass der transparente Körper mit der optisch wirksamen Struktur unmittelbar an die Lichtaustrittsfläche des mindestens einen Lichtleiters angrenzend angeordnet ist. Zwischen der Primäroptik, beispielsweise zwischen den Lichtaustrittsflächen der Lichtleiter, und dem optisch transparenten Körper, der die optisch wirksame Struktur aufweist, kann ein Abstand in Form eines Luftspalts vorgesehen sein. Es ist aber auch denkbar, dass der Abstand zwischen den Lichtaustrittsflächen der Lichtleiter und dem transparenten Körper durch ein transparentes, lichtdurchlässiges, vorzugsweise farbloses Material gefüllt ist. Durch dieses Material können die aus einem Lichtleiter ausgekoppelten Lichtstrahlen auf den transparenten Körper treffen.

Gemäß einer bevorzugten Ausführungsform der vorliegenden Erfindung wird vorgeschlagen, dass der transparente Körper mit der optisch wirksamen Struktur aus einem anderen Material als der mindestens eine Lichtleiter besteht, insbesondere aus einem Material mit einer höheren Brechzahl als der mindestens eine Lichtleiter. Ein höher brechendes Material würde zwar eine höhere Reflektivität an jeder Auskoppelfläche aufweisen, jedoch auch eine stärkere Bündelung bei geringeren Krümmungsradien, sodass die konvexe Auskoppelstruktur und ihre Modulationstiefe flacher, das heißt einfach und kostengünstiger herstellbar wären. Die aus dem Gebiet der Optik bekannte Index-Matching-Problematik an der Grenze zwischen Primäroptik-Lichtleiter und transparentem Körper stellt sich hier als nicht-kritisch dar, da die Brechzahldifferenz in der Größenordnung von maximal etwa 0,1 - 0,3 liegt. Die höhere Brechzahl wäre in diesem Fall mit einer kleineren Abbe-Zahl in Verbindung zu setzen, das heißt kleiner 50, also eher eine Flintglas- statt Kronglaswirkung bei dem niedriger brechenden Lichtleiter hat.

Vorteilhafterweise nehmen die Abmessungen der funktionsbestimmenden Strukturen der auf der Lichtaustrittsfläche des mindestens einen Lichtleiters bzw. auf einem dem mindestens einen Lichtleiter zugeordneten Flächenbereich des separaten transparenten Körpers ausgebildeten optisch wirksamen Struktur zu einem Rand der Lichtaustrittsfläche bzw. des Flächenbereichs hin ab, wobei insbesondere eine Abnahme bis auf Null möglich ist. Durch die Lichtablenkung mittels der Modulationsstruktur wird auch - zwar in geringem Maße - Streulicht generiert, sodass eine optimale Verteilung des Streulichts anzustreben ist. Aus diesem Grund kann die Modulationsstruktur so gestaltet werden, dass sie zum Rand einer jeden Lichtleiter-Auskoppelfläche bis auf Null abklingt und eine klare Trennung einzelner Pixel in der resultierenden Lichtverteilung auf der Fahrbahn gegeben ist und diese nahtlos aneinander anschließen. Somit ist die Projektion der Modulationsstruktur sowohl im Pixelinneren als auch an den Pixelrändern unauffällig. Alternativ kann die Modulationsstruktur auch pixelübergreifend gestaltet werden, möglichst so, dass an den Rändern der Lichtaustrittsflächen der Lichtleiter keine Stufen entstehen, das heißt die Lichtaustrittsflächen benachbarter Lichtleiter einer Primäroptik mit einem Lichtleiter-Array gehen nahtlos ineinander über.

Gemäß einer weiteren bevorzugten Ausführungsform der vorliegenden Erfindung wird vorgeschlagen, dass die Sekundäroptik mindestens eine Projektionslinse umfasst. Selbstverständlich ist es auch denkbar, dass die Sekundäroptik mindestens einen Reflektor umfasst, der die aus der Primäroptik ausgekoppelten Lichtbündel zur Erzeugung einer gewünschten Lichtverteilung auf der Fahrbahn vor dem Fahrzeug abbildet. Die als Projektionslinse ausgebildete Sekundäroptik des erfindungsgemäßen Scheinwerfermoduls weist vorzugsweise eine von einer Kreisfläche abweichend geformte Lichteintrittsfläche auf. Insbesondere für solche Scheinwerfermodule mit von einer Kreisform abweichend geformten Projektionslinsen ist die vorliegende Erfindung von besonderem Vorteil, da sie weitgehend ohne Effizienzverlust eine möglichst homogene Ausleuchtung von nahezu beliebig geformten Projektionslinsen ermöglicht.

Weitere Merkmale und Vorteile der vorliegenden Erfindung werden nachfolgend anhand der Figuren näher erläutert. Die genannten Merkmale können sowohl in Alleinstellung als auch in beliebiger Kombination für die Erfindung wichtig sein, ohne dass hierauf jeweils explizit hingewiesen wird. Es zeigen:
- Figur 1: ein aus dem Stand der Technik bekanntes Projektionsmodul eines Kraftfahrzeugscheinwerfers mit einer als kreisrunde Projektionslinse ausgebildeten Sekundäroptik zur Erzeugung einer Lichtverteilung ohne eine horizontale Hell-Dunkel-Grenze;
- Figur 2: ein aus dem Stand der Technik bekanntes Projektionsmodul eines Kraftfahrzeugscheinwerfers mit einer als kreisrunde Projektionslinse ausgebildeten Sekundäroptik zur Erzeugung einer Lichtverteilung mit einer horizontalen Hell-Dunkel-Grenze;
- Figur 3: ein aus der DE 10 2009 053 581 B3 bekanntes Projektionsmodul eines Kraftfahrzeugscheinwerfers in einer perspektivischen Ansicht;
- Figur 4: das aus der DE 10 2009 053 581 B3 bekannte Projektionsmodul in einer Ansicht von vorne;
- Figur 5: eine Detailansicht einer Primäroptik des bekannten Scheinwerferprojektionsmoduls nach den Figuren 3 und 4;
- Figur 6: eine von der Primäroptik aus Figur 5 auf einer Lichteintrittsfläche einer als Projektionslinse ausgestalteten Sekundäroptik erzeugte Lichtverteilung;
- Figur 7: ein erfindungsgemäßes Projektionsmodul eines Kraftfahrzeugscheinwerfers gemäß einer ersten bevorzugten Ausführungsform;
- Figur 8: ein erfindungsgemäßes Projektionsmodul eines Kraftfahrzeugscheinwerfers gemäß einer zweiten bevorzugten Ausführungsform in einer perspektivischen Ansicht;
- Figur 9: das erfindungsgemäße Projektionsmodul nach Figur 8 in einer Ansicht von vorne;
- Figur 10: ein erfindungsgemäßes Projektionsmodul eines Kraftfahrzeugscheinwerfers gemäß einer dritten bevorzugten Ausführungsform in einer perspektivischen Ansicht;
- Figur 11: das erfindungsgemäße Projektionsmodul nach Figur 10 in einer Ansicht von vorne;
- Figur 12: eine Detailansicht einer Primäroptik eines erfindungsgemäßen Scheinwerferprojektionsmoduls nach einer der Figuren 8 bis 11;
- Figur 13: ein Beispiel für eine von der Primäroptik aus Figur 12 auf einer Lichteintrittsfläche einer als Projektionslinse ausgestalteten Sekundäroptik erzeugte Lichtverteilung;
- Figur 14: ein erstes Beispiel für eine in einer virtuellen Objektebene der Primäroptik eines erfindungsgemäßen Projektionsmoduls ausgebildete optisch wirksame, lichtbrechende Struktur in einer vergrößerten Ansicht;
- Figur 15: ein weiteres Beispiel für eine in einer virtuellen Objektebene der Primäroptik eines erfindungsgemäßen Projektionsmoduls ausgebildete optisch wirksame, lichtbrechende Struktur in einer vergrößerten Ansicht;
- Figur 16: ein weiteres Beispiel für eine in einer virtuellen Objektebene der Primäroptik eines erfindungsgemäßen Projektionsmoduls ausgebildete optisch wirksame, lichtbrechende Struktur in einer vergrößerten Ansicht;
- Figur 17: ein erfindungsgemäßes Projektionsmodul eines Kraftfahrzeugscheinwerfers gemäß einer vierten bevorzugten Ausführungsform zur Erzeugung einer Lichtverteilung ohne Hell-Dunkel-Grenze in einer perspektivischen Ansicht;
- Figur 18: ein erfindungsgemäßes Projektionsmodul eines Kraftfahrzeugscheinwerfers gemäß einer fünften bevorzugten Ausführungsform zur Erzeugung einer Lichtverteilung mit Hell-Dunkel-Grenze in einer perspektivischen Ansicht; und
- Figur 19: einen erfindungsgemäßen Kraftfahrzeugscheinwerfer in einer schematischen Ansicht.

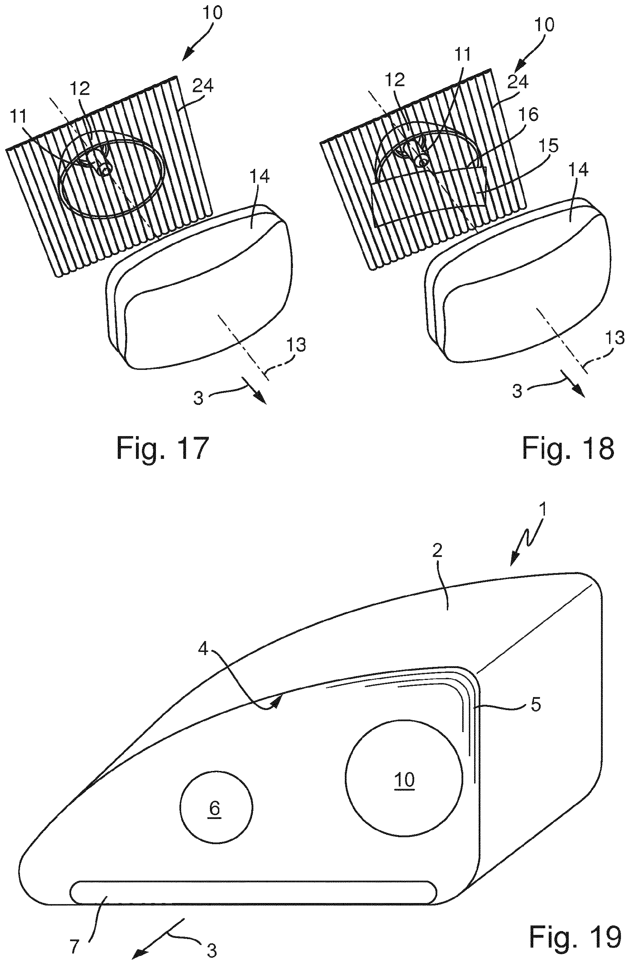

Die vorliegende Erfindung betrifft das Gebiet der Kraftfahrzeugscheinwerfer. Ein solcher Scheinwerfer ist beispielhaft in Figur 19 dargestellt und in seiner Gesamtheit mit dem Bezugszeichen 1 bezeichnet. Der Scheinwerfer 1 umfasst ein Scheinwerfergehäuse 2, das vorzugsweise aus Kunststoff gefertigt ist. In einer Lichtaustrittsrichtung 3 weist das Gehäuse 2 eine Lichtaustrittsöffnung 4 auf, die mittels einer transparenten Abdeckscheibe 5 verschlossen ist, die vorzugsweise aus Glas oder einem transparenten Kunststoff gefertigt ist. Selbstverständlich können das Gehäuse 2 und die Abdeckscheibe 5 auch aus anderen als den genannten Materialien bestehen. Die Abdeckscheibe 5 kann optisch wirksame Elemente, beispielsweise Prismen oder Zylinderlinse aufweisen, um das hindurchtretende Licht in horizontaler und/oder vertikaler Richtung zu streuen. Es ist aber auch denkbar, dass die Abdeckscheibe 5 als eine sogenannte klare Scheibe ohne optisch wirksame Elemente ausgebildet ist.

Im Inneren des Scheinwerfergehäuses 2 ist mindestens ein erfindungsgemäßes Projektionsmodul 10 angeordnet, dessen genaue Ausgestaltung und Funktionsweise weiter unten im Detail erläutert wird. Das Projektionsmodul 10 dient zur Erzeugung zumindest eines Teils einer vorgegebenen Lichtverteilung, wie bspw. eines Abblendlichts, eines Fernlichts, eines Nebellichts oder einer beliebigen adaptiven Lichtverteilung (z.B. Stadtlicht, Landstraßenlicht, Autobahnlicht, Schlechtwetterlicht etc.). Außer dem Projektionsmodul 10 können in dem Gehäuse 2 auch noch weitere Licht- und/oder Leuchtenmodule 6, 7 angeordnet sein.

In dem in Figur 19 dargestellten Beispiel ist ein weiteres Scheinwerfermodul 6 vorgesehen, das als ein Projektionsmodul oder als ein Reflexionsmodul ausgebildet sein kann. Das Scheinwerfermodul 6 dient vorzugsweise zur Erzeugung einer anderen vorgegebenen Lichtverteilung als die von dem Projektionsmodul 10 erzeugte Lichtverteilung. Es ist aber auch denkbar, dass das Scheinwerfermodul 6 zusammen mit dem Projektionsmodul 10 die vorgegebene Lichtverteilung erzeugt. So könnte bspw. eine Fernlichtverteilung dadurch erzeugt werden, dass eine Spot-Lichtverteilung, die eher zur Ausleuchtung eines relativ eng begrenzten Bereichs in größerer Entfernung von dem Fahrzeug dient, eine Grundlichtverteilung überlagert, die eher für eine breitere Ausleuchtung in geringerer Entfernung vor dem Fahrzeug sorgt. Eines der Scheinwerfermodule 6; 10 könnte dabei die Spotlichtverteilung und das andere Modul 10; 6 die Grundlichtverteilung erzeugen. Ferner ist in dem dargestellten Beispiel des Scheinwerfers 1 ein Leuchtenmodul 7 entlang des unteren Rands der Abdeckscheibe 5 im Gehäuse 2 vorgesehen. Das Leuchtenmodul 7 dient zur Erzeugung einer oder mehrerer Leuchtenfunktionen, wie bspw. Blinklicht, Positions-, Begrenzungs- oder Standlicht oder Tagfahrlicht.

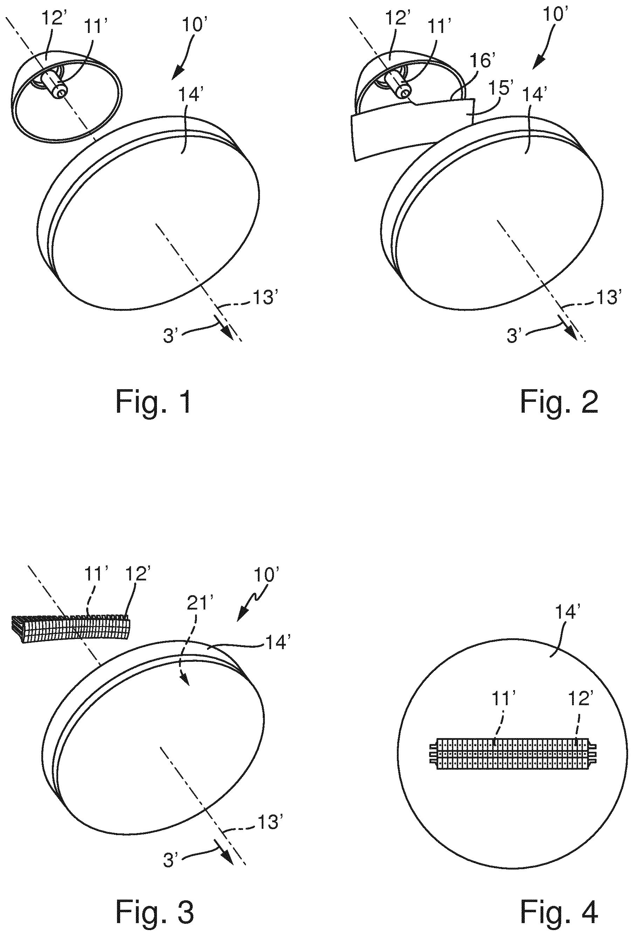

Ein aus dem Stand der Technik bekanntes Projektionsscheinwerfermodul für ein Kraftfahrzeug ist beispielhaft in Figur 1 gezeigt und in seiner Gesamtheit mit dem Bezugszeichen 10' bezeichnet. Das Projektionsmodul 10' dient zur Erzeugung einer vorgegebenen Lichtverteilung, wie oben bereits unter Bezugnahme auf Figur 19 erläutert. Das Modul 10' umfasst eine Lichtquelle 11' zum Aussenden von Licht, die in dem Beispiel der Figur 1 als eine Halogenlampe oder als eine Glühlampe ausgebildet ist. Ferner umfasst das Projektionsmodul 10' eine Primäroptik 12' zum Bündeln zumindest eines Teils des von der Lichtquelle 11' ausgesandten Lichts. In dem Beispiel der Figur 1 ist die Primäroptik 12' als ein schalenförmiger Reflektor ausgebildet. Dieser hat in einer eine optische Achse 13' umfassenden Schnittebene vorzugsweise die Form eine Ellipsoids oder eine davon geringfügig abweichende Freiform. Es ist denkbar, dass der Reflektor 12' in einer Vertikalschnittebene und einer Horizontalschnittebene unterschiedlich geformt ist.

Ferner umfasst das bekannte Projektionsmodul 10' eine Sekundäroptik 14', die zumindest einen Teil des von der Primäroptik 12' gebündelten Lichts in Lichtaustrittsrichtung 3' des Lichtmoduls 10' projiziert, vorzugsweise vor das Kraftfahrzeug, insbesondere auf die Fahrbahn vor dem Kraftfahrzeug. Die Sekundäroptik 14' ist in dem dargestellten Beispiel als eine Projektionslinse mit kreisrunder Querschnittsfläche ausgebildet. Es ist denkbar, dass die Sekundäroptik 14' auch aus einem System umfassend zwei oder mehr Linsen besteht. Diese Linsen können aus verschiedenen Materialien mit unterschiedlich starker Dispersion (unterschiedlicher Abbe-Zahl) bestehen. Insbesondere könnte die Sekundäroptik aus einer Sammellinse (bevorzugt aus Kronglas) und einer Zerstreuungslinse (bevorzugt aus Flintglas) mit kleinerer Abbe-Zahl und somit stärkerer Dispersion als die Sammellinse bestehen. Das Projektionsmodul 10 aus Figur 1 dient vorzugsweise zur Erzeugung einer Fernlichtverteilung.

Ein weiteres Beispiel für ein aus dem Stand der Technik bekanntes Projektionsmodul 10' ist in Figur 2 dargestellt. Das Projektionsmodul 10' aus Figur 2 weist eine große Ähnlichkeit zu dem Projektionsmodul 10' aus Figur 1 auf. Es unterscheidet sich insbesondere dadurch, dass in einer **virtuellen Objektebene der Primäroptik 12'** oder in der Nähe der Objektebene eine **Blendenanordnung 15'** angeordnet ist, die einen Teil des von der Primäroptik 12' gebündelten Lichts abschattet. Das Projektionsmodul 10' aus Figur 2 dient zur Erzeugung einer abgeblendeten Lichtverteilung, bspw. eines Abblendlichts oder eines Nebellichts, wobei die Sekundäroptik 14' eine Oberkante 16' der Blendenanordnung 15' als Hell-Dunkel-Grenze der Lichtverteilung in Lichtaussetzrichtung 3' vor das Kraftfahrzeug projiziert.

Figur 3 zeigt ein weiteres aus dem Stand der Technik bekanntes Lichtmodul 10', dessen Aufbau und Funktionsweise im Detail in der DE 10 2009 053 581 B3 beschrieben ist. Auf diese Druckschrift wird hinsichtlich des Aufbaus und der Funktionsweise des Lichtmoduls 10' aus Figur 3 ausdrücklich Bezug genommen und der Inhalt dieser Druckschrift soll Gegenstand auch der vorliegenden Anmeldung sein. Das in Figur 3 gezeigte Beispiel des bekannten Projektionsmoduls 10' unterscheidet sich von den in den Figuren 1 und 2 gezeigten Projektionsmodulen 10' insbesondere dadurch, dass die Lichtquelle 11' (in Figur 3 nicht zu erkennen, da durch die Primäroptik 12' verdeckt) mehrere Halbleiterlichtquellen, insbesondere Leuchtdioden (LEDs), umfasst. Insbesondere weist die Lichtquelle 11' mehrere in einer Reihe oder Spalte neben- oder übereinander oder - wie in dem Beispiel der Figur 3 - mehrere matrixartige neben- und übereinander angeordnete Halbleiterlichtquellen auf. In dem gezeigten Beispiel umfasst die Lichtquelle 11' eine 3 x 30-Matrix mit insgesamt 90 LED-Lichtquellen 11'.

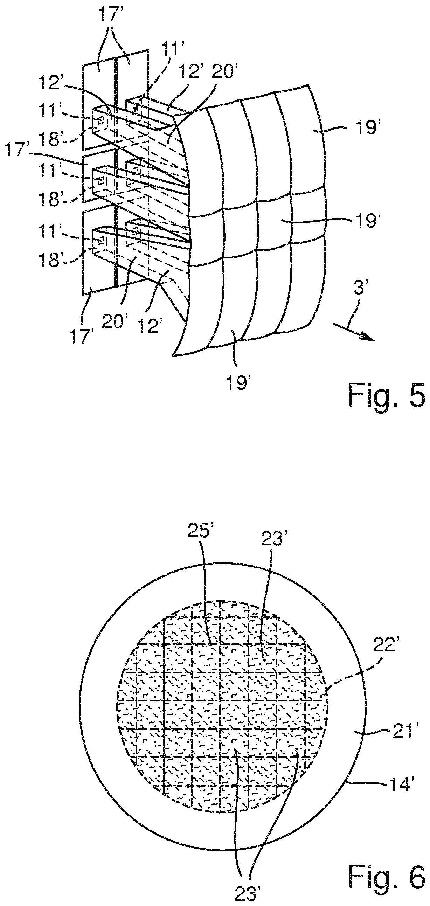

Ferner ist bei dem Beispiel aus Figur 3 die Primäroptik 12' anders als in den Figuren 1 und 2 ausgestaltet. Die Primäroptik 12' umfasst mehrere in einer Reihe oder Spalte neben- oder übereinander oder - wie in dem Beispiel der Figur 3 gezeigt - mehrere matrixartig neben- und übereinander angeordnete Lichtleiter, die jeweils eine einer der LED-Lichtquellen 11' zugewandte Lichteintrittsfläche, eine in Lichtaustrittsrichtung 3' gerichtete Lichtaustrittsfläche und zwischen der Lichteintrittsfläche und der Lichtaustrittsfläche ausgebildete totalreflektierende Seitenflächen aufweist. Die Ausgestaltung der Lichtleiter 12' ist im Detail in Figur 5 gezeigt. Figur 4 zeigt eine Ansicht des bekannten Projektionsmoduls 10' aus Figur 3 von vorne, d. h. entgegen der Lichtaustrittsrichtung 3'. Die matrixartig angeordneten Lichtleiter 12' sind hinter der Projektionslinse 14 angeordnet. Die matrixartig angeordneten LED-Lichtquellen 11' sind wiederum hinter den Lichtleitern 12 angeordnet.

In Figur 5 ist die Primäroptik 12' des Projektionsmoduls 10' aus Figur 3 im Detail dargestellt. Ferner erkennt man, dass die LED-Lichtquellen 11' auf einem Trägerelement 17' angeordnet sind, das bspw. als eine Leiterplatte (PCB; printed circut board) ausgebildet ist. Dabei ist jede der LED-Lichtquellen 11' auf einem eigenen Trägerelement 17' angeordnet. Selbstverständlich ist es denkbar, mehrere der LED-Lichtquellen 11' oder sogar alle LED-Lichtquellen 11' des Projektionsmoduls 10' auf einem gemeinsamen Trägerelement 17' anzuordnen. Die Trägerelemente 17' stehen ihrerseits wärmetechnisch leitfähig mit einem oder mehreren Kühlkörpern (nicht dargestellt) in Verbindung, sodass die von den LED-Lichtquellen 11' während ihres Betriebs erzeugte Abwärme möglichst effizient an die Umgebung abgegeben werden kann.

Die Lichtleiter 12' sind bevorzugt aus Silikon hergestellt. Selbstverständlich ist es möglich, die Lichtleiter 12' auch aus einem anderen transparenten Material, bspw. Glas, einem anderen Kunststoff oder einem technisch vergleichbaren Material herzustellen. Sie weisen jeweils eine der ihnen zugeordneten LED-Lichtquelle 11' zugewandte Lichteintrittsfläche 18', eine in Lichtaustrittsrichtung 3' gerichtete Lichtaustrittsfläche 19' sowie zwischen der Lichteintrittsfläche 18' und der Lichtaustrittsfläche 19' ausgebildete totalreflektierende Seitenflächen 20' auf. Die Seitenflächen 20' sind zumindest in Teilbereichen konkav gekrümmt, sodass die Lichtleiter 12' im Wesentlichen sich konisch bzw. trichterförmig erweiternd ausgebildet sind. In anderen Teilbereichen können die Seitenflächen 20' aber auch eben, jedoch konisch verlaufend ausgebildet sein. Wichtig ist, dass in Lichtaustrittsrichtung 3' die Seitenflächen 20' der Lichtleiter 12' jeweils nicht parallel zueinander verlaufen, sondern auseinander driften.

Ein sich durch das Lichtleiter-Array 12' auf einer Lichteinkoppelfläche 21' der Sekundäroptik 14' ergebende Lichtverteilung ist beispielhaft in Figur 6 gezeigt. Es ist zu erkennen, dass die Lichtverteilung eine mit einer gestrichelten Linie 22' abgegrenzte, im Wesentlichen kreisrunde oder ovale Lichtdurchtrittsfläche 25' ausleuchtet. In dem ausgeleuchteten Bereich 25' sind die einzelnen Pixel 23' der durch jeweils einen Lichtleiter 12'erzeugten Einzel-Lichtbündel zu erkennen. Zur Veranschaulichung sind zwischen den einzelnen Pixel 23' gestrichelte Linien eingezeichnet, die in der Realität jedoch nicht vorhanden sind. Jedes der Pixel 23' wird durch ein Teillichtbündel gebildet, das von einem der Lichtleiter 12' des Lichtleiter-Arrays erzeugt worden ist.

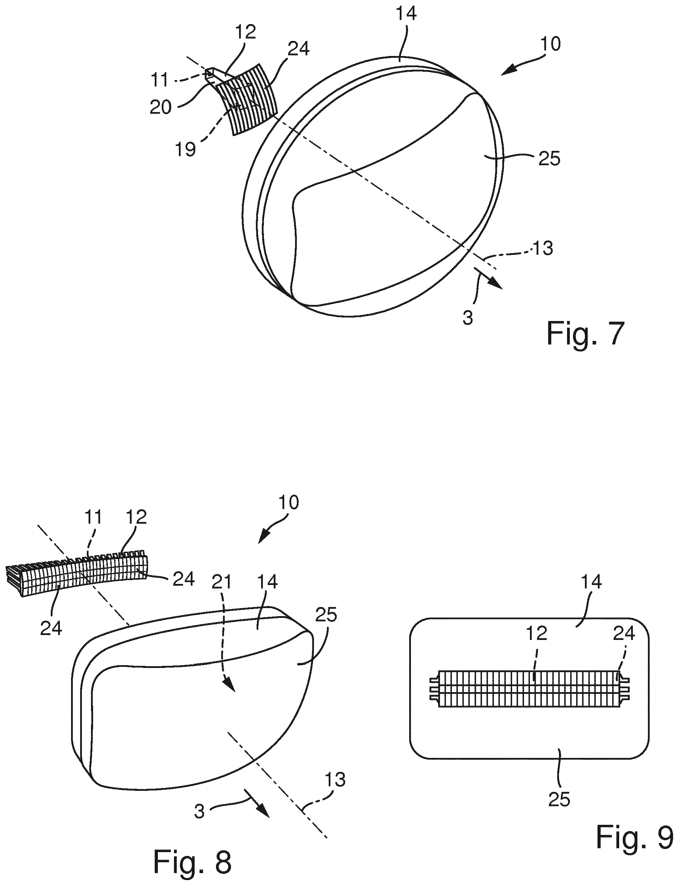

Entscheidend ist, dass sich die aus dem Stand der Technik bekannten Projektionsmodule 10', wie sie in den Figuren 1 bis 5 dargestellt sind, lediglich zur Ausleuchtung einer kreisrunden Lichtdurchtrittsfläche 25' der Sekundäroptik 14' eignen. Mit der vorliegenden Erfindung soll die durch die Primäroptik 12' erzeugte Lichtverteilung derart variiert werden, dass ohne oder nur einen sehr geringen Effizienzverlust auch nicht kreisförmige Lichtdurchtrittsflächen 22 einer Sekundäroptik 14 mit einer vorgegebenen Intensitätsverteilung, vorzugsweise möglichst homogen, vollständig ausgeleuchtet werden können. Diese Aufgabe wird durch das erfindungsgemäße Projektionsmodul gelöst, von dem ein erstes Ausführungsbeispiel in Figur 7 schematisch dargestellt ist.

Als Primäroptik ist beispielhaft ein einzelner Lichtleiter 12 dargestellt, dessen Querschnittsfläche sich von der Lichteintrittsfläche 18 (nicht dargestellt) zu der Lichtaustrittsfläche 19 hin erweitert, d. h. die Seitenflächen 20 driften in Lichtaustrittsrichtung 3 auseinander, sodass sich insgesamt ein trichterförmiger Lichtleiter 12 ergibt. Erfindungsgemäß ist in einer virtuellen Objektebene der Primäroptik 12 eine optisch wirksame lichtbrechende Struktur 24 im Strahlengang des gebündelten Lichts angeordnet. Genauer gesagt ist die optisch wirksame Struktur 24 in oder in unmittelbarer Nähe der virtuellen Objektlage der von der Primäroptik 12 generierten Lichtverteilung angeordnet. Durch die Struktur 24 wird die örtliche Lichtverteilung nicht oder nicht wesentlich geändert. Allerdings wird durch die Struktur 24 die örtliche Primäroptik-Auskoppelrichtung so modifiziert, dass eine vorgegebene (z.B. homogene) Ausleuchtung der Sekundäroptik 14 erzielt werden kann. Der durch das von der Primäroptik 12 erzeugte Lichtbündel ausgeleuchtete Bereich der Sekundäroptik 14 ist mit dem Bezugszeichen 25 bezeichnet. Der Bereich 25 wird auch als Lichtdurchtrittsfläche bezeichnet. Es ist deutlich zu erkennen, dass die Lichtdurchtrittsfläche 25 nicht, wie bei dem bekannten Projektionsmodul 10' kreisförmig, sondern rechteckig oder rhombusförmig ausgebildet, d.h. gestreckt worden ist.

Die von der Primäroptik 12 erzeugte Lichtverteilung wird durch die in geeigneter Weise ausgestaltete optisch wirksame Struktur 24 in die gewünschte rechteckige oder rhombusförmige Form der Lichtdurchtrittsfläche 25 gebracht. Die optisch wirksamen Struktur 24 kann bspw. als eine Wellenstruktur ausgebildet sein, die in Richtung der Deformation der Linse 14 verläuft. Längsachsen von Wellenbergen und Wellentälern der Wellenstruktur erstrecken sich also quer zur Deformationsrichtung der Linse 14. Die Deformationsrichtung ist diejenige Richtung, in der eine zunächst kreisförmige Linse gestreckt wird, um die von der Kreisform abweichende Form der Linse 14 zu erreichen.

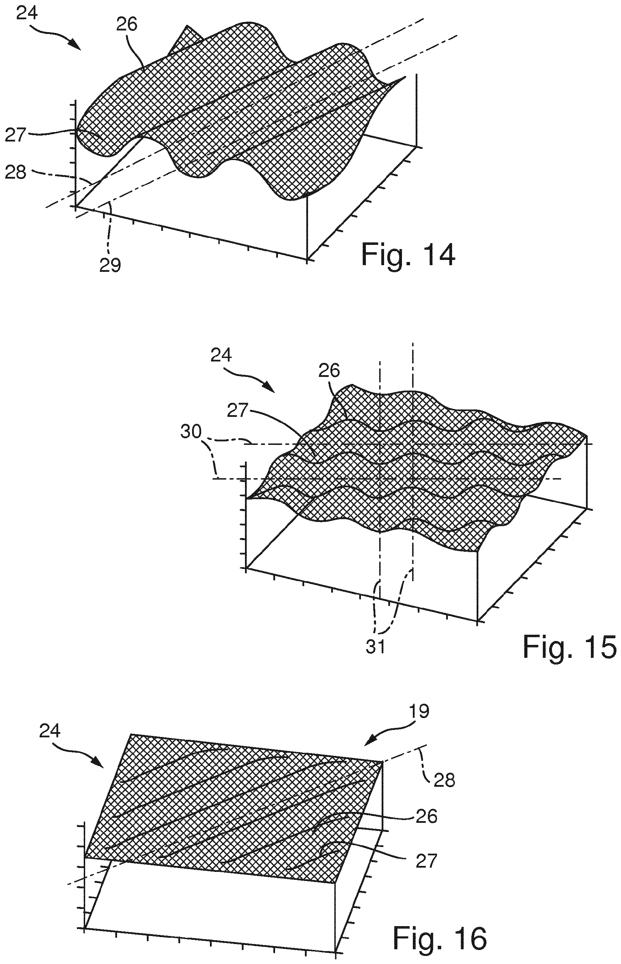

Selbstverständlich kann die optisch wirksame Struktur 24 auch so ausgestaltet sein, dass eine große Vielfalt an unterschiedlichen Konturen der Lichtdurchtrittsfläche 25 möglichst vollständig ausgeleuchtet werden kann. Wenn das die Sekundäroptik 14 durch die Lichtdurchtrittsfläche 25 passierende Licht durch die Sekundäroptik 14 vor das Kraftfahrzeug projiziert wird, unterscheidet sich die auf die Fahrbahn projizierte, resultierende Lichtverteilung nicht oder nicht wesentlich von der durch ein entsprechendes, aus dem Stand der Technik bekanntes Lichtmodul 10' ohne optisch wirksame Struktur 24 erzeugten Lichtverteilung. Die resultierende Lichtverteilung des erfindungsgemäßen Lichtmoduls 10 entspricht also weitgehend den durch die bekannten Projektionsmodule 10' erzeugten Lichtverteilungen und erfüllt die gesetzlichen Anforderungen. Lediglich die Ausleuchtung der abbildenden Optik, insbesondere bei Sekundäroptiken 14 mit einer von einer Kreisform abweichenden Form bzw. mit von der Kreisform abweichender Lichtdurchtrittsfläche 25, ist gegenüber den bekannten Projektionsmodulen 10' deutlich verbessert. Die Ausgestaltung, Anordnung und Funktionsweise der optisch wirksamen Struktur 24 wird nachfolgend unter Bezugnahme auf die Figuren 14 bis 16 näher erläutert. Das auf die Sekundäroptik 14 auftreffende Licht wird durch die optisch wirksame Struktur 24 lediglich umverteilt, jedoch nicht oder allenfalls nur geringfügig mengenmäßig variiert.

In Figur 8 ist ein weiteres Ausführungsbeispiel eines erfindungsgemäßen Projektionsmoduls 10 dargestellt. Dabei umfasst die Primäroptik 12 mehrere matrixartig angeordnete Lichtleiter. Die Sekundäroptik 14 ist nicht mehr als eine kreisförmige Projektionslinse ausgebildet. Vielmehr hat die Projektionslinse 14 eine in etwa rechteckige Form. Praktisch die gesamte rechteckige Lichteinkoppelfläche 21 der Projektionslinse 14 wird von der durch die Primäroptik 12 erzeugten Lichtverteilung in gewünschter Weise ausgeleuchtet, sodass die Lichtdurchtrittsfläche 25 in etwa der Lichteintrittsfläche 21 entspricht.

Die optisch wirksame Struktur 24 ist in dem dargestellten Ausführungsbeispiel der Figur 8 auf den Lichtaustrittsflächen 19 der trichterförmigen Lichtleiter 12 ausgebildet. Dabei kann die optisch wirksame Struktur 24 integraler Bestandteil der Lichtleiter 12 sein. Es ist aber auch denkbar, dass die optisch wirksame Struktur 24 auf einem von den Lichtleitern 12 separaten transparenten Körper (nicht dargestellt) aufgebracht ist, der in Lichtaustrittsrichtung 3 nach den Lichtaustrittsflächen 19 der Lichtleiter 12 im Strahlengang angeordnet ist. Der Abstand zwischen den Lichtaustrittsflächen 19 der Lichtleiter 12 und dem transparenten Körper mit der optisch wirksamen Struktur 24 kann so klein gewählt werden, dass sich lediglich ein minimaler Luftspalt einstellt, d.h. der transparente Körper mit der optisch wirksamen Struktur 24 unmittelbar an die Lichtaustrittsflächen 19 der Lichtleiter 12 angrenzt. Es ist denkbar, den Luftspalt mit einem transparenten Material auszufüllen. Das Material des transparenten Körpers mit der optisch wirksamen Struktur 24 kann ein anderes sein als das Material der Lichtleiter 12. Insbesondere kann das Material des transparenten Körpers eine höhere Brechzahl aufweisen als das Material der Lichtleiter 12.

Figur 9 zeigt das Ausführungsbeispiel der Figur 8 des erfindungsgemäßen Projektionsmoduls 10 in einer Ansicht von vorne, d.h. entgegen der Lichtaustrittsrichtung 3. Dabei verdeckt die Projektionslinse 14 das Lichtleiter-Array 12, und hinter dem Lichtleiter-Array 12 sind, eigentlich ebenfalls nicht sichtbar, die matrixartig angeordneten LED-Lichtquellen 11 positioniert.

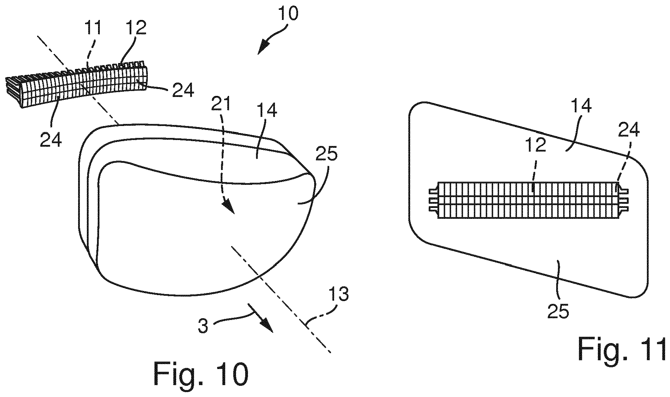

Figur 10 zeigt ein weiteres Ausführungsbeispiel eines erfindungsgemäßen Projektionsmoduls 10 gemäß einer bevorzugten Ausführungsform. Dieses Ausführungsbeispiel unterscheidet sich von dem Ausführungsbeispiel aus den Figuren 8 und 9 insbesondere dadurch, dass die Sekundäroptik 14 als eine im Wesentlichen rhombusförmige Projektionslinse ausgebildet ist. Die Rhombusform ist besonders gut in der Ansicht von vorne, d.h. entgegen der Lichtaustrittsrichtung 3, der Figur 11 zu erkennen. Damit das von der Primäroptik 12 gebündelte Licht die rhombusförmige Lichtdurchtrittsfläche 25 möglichst homogen und vollständig ausleuchtet, ist die optisch wirksame Struktur 24 des Ausführungsbeispiels der Figuren 10 und 11 etwas anders ausgebildet als die optisch wirksame Struktur 24 des Ausführungsbeispiels der Figuren 8 und 9. Auch bei dem Ausführungsbeispiel der Figuren 10 und 11 ist die optisch wirksame Struktur 24 entweder unmittelbar auf den Lichtaustrittsflächen 19 der Lichtleiter 12 oder auf einem separaten transparenten Körper der im Strahlengang des von der Primäroptik 12 gebündelten Lichts angeordnet ist, ausgebildet.

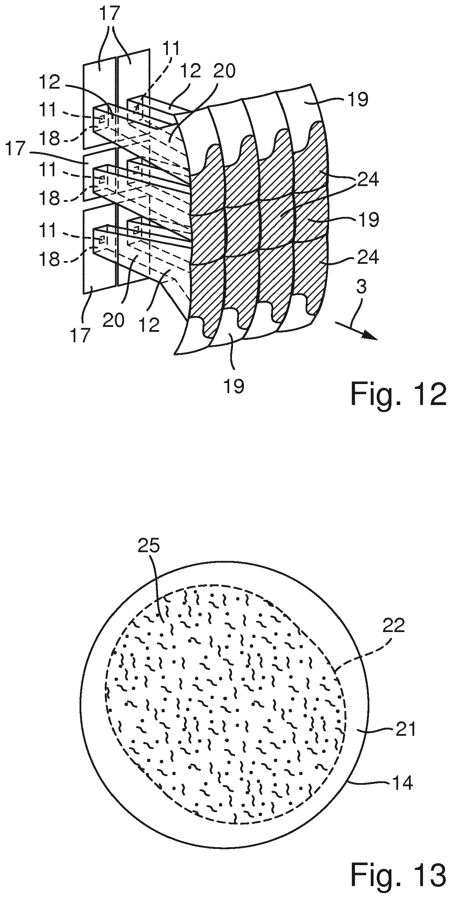

Figur 12 zeigt eine Primäroptik 12 eines erfindungsgemäßen Projektionsmoduls 10 gemäß einer bevorzugten Ausführungsform, bspw. die Primäroptik 12 eines Projektionsmoduls 10 aus einer der Figuren 8 bis 11. Es ist deutlich zu erkennen, dass zumindest auf einem Teil der Lichtaustrittsflächen 19 der Lichtleiter 12 die optisch wirksame Modulations- oder Wellenstruktur 24 ausgebildet ist. Die in Figur 12 beispielhaft eingezeichnete Struktur 24 kann also einen Teil oder die ganze Austrittsfläche 19 eines Lichtleiters 12 bedecken. Diese Struktur 24 bewirkt eine örtliche Modifikation der Primäroptik-Auskoppelrichtung, sodass sich von einer Kreisform abweichend geformte Einzel-Lichtbündel ergeben, die sich zu einer ebenfalls von der Kreisform abweichenden Lichtverteilung auf der Lichteinkoppelfläche 21 der Sekundäroptik 14 addieren, wie sie bspw. in Figur 13 gezeigt ist. Insbesondere hat die durch die gestrichelte Linie 22 eingegrenzte Lichtverteilung eine Rhombusform oder eine rhombusähnliche Form, sodass es sich insbesondere zur Ausleuchtung einer rhombusförmigen Projektionslinse 14 eignen würde, wie sie bspw. in dem Ausführungsbeispiel der Figuren 10 und 11 dargestellt ist. Durch die Erfindung wird eine von einer Kreisform abweichende Sekundäroptik 14 besser, insbesondere großflächiger, ausgeleuchtet. Zudem kann durch geeignete Ausgestaltung der Strukturen 24 die Intensitätsverteilung der resultierenden Lichtverteilung in gewünschter Weise, insbesondere möglichst homogen, eingestellt werden.

Bei einer im Wesentlichen kreisförmigen Projektionslinse 14 würde der durch die mit der gestrichelten Linie 22 abgegrenzte Lichtverteilung ausgeleuchtete Bereich der Lichtdurchtrittsfläche 25 entsprechen. Bei einer im Wesentlichen kreisförmig ausgestalteten Projektionslinse 14 wäre der Lichtdurchtrittsbereich 25 also kleiner als die Lichteinkoppelfläche 21 der Projektionslinse 14. Dies ist beispielhaft in Figur 13 dargestellt. Falls jedoch die Projektionslinse 14 in einer von der Kreisform abweichenden Form, bspw. rhombusförmig ausgebildet ist, könnte die Lichtdurchtrittsfläche 25 nahezu die gesamte Lichteinkoppelfläche 21 der rhombusförmigen Projektionslinse 14 abdecken.

Anhand der Figur 13 ist ferner zu erkennen, dass durch die optisch wirksame Struktur 24 nicht nur die auf die Sekundäroptik 14 auftreffende Lichtverteilung geformt, sondern auch noch homogenisiert wird. Dies wird dadurch deutlich, dass die durch die gestrichelte Linie 22 begrenzte Lichtverteilung bzw. der durch diese ausgeleuchtete Bereich 25 der Lichteinkoppelfläche 21 der Projektionslinse 14 keine einzelnen Pixel (vgl. Pixel 23' in Figur 6) mehr erkennen lässt, sondern als eine homogen ausgeleuchtete Fläche erscheint. Es ist anzumerken, dass die optisch wirksame Struktur 24 als integraler Bestandteil der Lichtaustrittsflächen 19 der Lichtleiter 12 oder als Teil eines separaten transparenten Körpers ausgebildet sein kann.

Wenn die Struktur 24 direkt auf den Austrittsflächen 19 der Lichtleiter 12 ausgebildet ist, werden die Lichtaustrittsflächen 19 bspw. mit einer welligen Struktur 24 moduliert, sodass die Flächen 19 ihren prinzipiellen Grundverlauf, bspw. die Konvexwölbung, beibehalten. Die wellige Struktur 24 ist jedoch so ausgestaltet, dass sie örtlich quer zur Längsrichtung der Modulation (quer zu den Längsachsen der Wellen) auf Grund von Lichtbrechung streuen. Dadurch wird eine Punktewolke von Durchstoßpunkten einzelner Lichtstrahlen quer zur Modulationsrichtung und bevorzugt innerhalb der beschnittenen Sekundäroptik-Grenzen (gestrichelte Linie 22) gestreckt (vgl. Figur 13). Somit kann die modifizierte örtliche Lichtverteilung der durch die Primäroptik 12 erzeugten Lichtverteilung z. B. an einen rhombusförmigen Design-Querschnitt einer Projektionslinse 14 angepasst werden.

Die Modulation 24 ist bei dem Ausführungsbeispiel aus Figur 12 direkt auf der Primäroptikaustrittsfläche 19 eingearbeitet. Dadurch ändert sich die durch die Lichtleiter 12 generierte lokale Lichtverteilung nicht oder allenfalls sehr geringfügig. Diese örtlich unveränderte Lichtverteilung in der virtuellen Objektebene der Sekundäroptik 14 wird von der Sekundäroptik 14 auf die Fahrbahn projiziert, idealerweise in einem veränderten Maßstab wiederholt. Die Modulationsstruktur 24 ändert lediglich die Lichtausbreitungsrichtung zwischen Primär- und Sekundäroptik 12, 14 derart, dass keine zusätzlichen Effizienzverluste entstehen, d.h. die kompletten gestreckten Lichtbündel treffen auf die Sekundäroptik 14 und gelangen in der Folge auf die Fahrbahn. Da dabei eine stärkere Durchmischung zwischen Primäroptik 12 und Sekundäroptik 14 als bei den bisher bekannten Projektionsmodulen 10' stattfindet, trägt die Modulationsstruktur 24 auch zur potentiellen Verbesserung der Farbhomogenität, also einer Unterdrückung von Farbanhäufungen durch Lichtdispersionseffekte an den zuvor glatten Primäroptik-Auskoppelflächen 19', bei.

Die optisch wirksame Struktur 24 ist gemäß dem Ausführungsbeispiel der Figur 14 als eine eindimensionale Wellenstruktur mit mehreren Wellen ausgebildet. Die Wellen umfassen Wellenberge 26 und Wellentäler 27. Die Wellenberge 26 und die Wellentäler 27 der Wellenstruktur werden durch zylindrische oder quasi-zylindrische Abschnitte gebildet, die vorzugsweise einen Kreis- oder ellipsenförmigen Querschnitt aufweisen. In Figur 14 sind beispielhaft zwei Längsachsen 28, 29 der Wellenstruktur 24 eingezeichnet. Die Längsachsen 28, 29 der zylindrischen oder quasi-zylindrischen Abschnitte verlaufen vorzugsweise parallel zueinander.

Die optisch wirksame Struktur 24 ist vorzugsweise als eine Mikrostruktur mit Abmessungen der funktionsbestimmenden Strukturteile im Mikrometerbereich ausgebildet. Als funktionsbestimmende (optisch wirksame) Strukturteile der Modulationsstruktur 24 können die Wellenberge 26 und die Wellentäler 27, bzw. die Flanken der Wellenstruktur 24; 26, 27 bezeichnet werden. Die Höhenunterschiede zwischen den Wellentälern 27 und den Wellenbergen 26 entsprechen den Abmessungen der funktionsbestimmenden Strukturen, die vorzugsweise im Mikrometerbereich liegen, d. h. im Bereich mehrerer 10⁻⁶ m. Die Breite der Wellenberge 26 und/oder der Wellentäler 27, d.h. die Wellenlänge der Wellenstruktur 24; 26, 27, liegt vorzugsweise im Millimeterbereich, d.h. im Bereich mehrerer 10⁻³ m.

Sowohl die Höhe als auch die Breite der funktionsbestimmenden Strukturelemente 26, 27, d.h. die Wellenlänge der Struktur 24, kann über eine Lichtaustrittsfläche 19 eines Lichtleiters 12 verteilt variieren, d.h. unterschiedliche Werte annehmen. Alternativ oder zusätzlich kann sowohl die Höhe als auch die Breite der funktionsbestimmenden Strukturelemente 26, 27, d.h. die Wellenlänge der Struktur 24, zwischen den Lichtaustrittsflächen 19 der einzelnen Lichtleiter 12 eines Lichtleiter-Arrays (vgl. Figur 12) variieren. Ferner müssen die Strukturen 24 nicht unbedingt lineare Wellen mit Geraden als Längsachsen 28, 29, 30, 31 der Wellenberge 26 und der Wellentäler 27 aufweisen. Es wäre denkbar, dass die Strukturen 24 auch gebogene Wellen mit beliebig gebogenen Kurven als Längsachsen 28, 29, 30, 31 der Wellenberge 26 und der Wellentäler 27 aufweisen. Ferner ist es denkbar, dass die Strukturen 24 keine Wellen aufweisen, sondern andere Licht brechende Strukturen, bspw. eine Sägezahn- oder Prismenstruktur.

Mögliche Alternativen der optisch wirksamen Struktur 24 sind Modulationen, die nicht nur zylindrisch, also in eine Vorzugsrichtung, stattfinden, sondern zweidimensionale Modulationen, wobei sich eine Berg-und-Tal-Modulation einstellen lässt. Eine solche Modulation ist beispielhaft in Figur 15 dargestellt. Die dort dargestellte optisch wirksame Struktur 24 ist als eine zweidimensionale Wellenstruktur mit einer ersten Gruppe von Wellen und einer zweiten Gruppe von Wellen ausgebildet. Wellenberge 26 und Wellentäler 27 der Wellen werden durch eine Überlagerung von zylindrischen oder quasi-zylindrischen Abschnitten der beiden Gruppen von Wellen gebildet. Längsachsen 30 des zylindrischen oder quasi-zylindrischen Abschnitts der ersten Gruppe von Wellen verlaufen parallel zueinander. Ebenso verlaufen Längsachsen 31 der zylindrischen oder quasi-zylindrischen Abschnitte der zweiten Gruppe von Wellen parallel zueinander. Dabei sind die Längsachsen 30 der ersten Gruppe von Wellen und die Längsachsen 31 der zweiten Gruppe von Wellen in einem Winkel größer Null Winkelgrad zueinander ausgerichtet. Insgesamt ergibt sich auf diese Weise die beschriebene Berg-und-Tal-Modulationsstruktur 24. Damit ergibt sich eine Streuung des hindurchtretenden Lichts sowohl quer zur Längsrichtung (zu den Längsachsen 30) der ersten Gruppe von Wellen als auch quer zur Längsrichtung (zu den Längsachse 31) der zweiten Gruppe von Wellen. Durch die Steilheit der Berg-und-Tal-Modulation kann auch eine andere als eine kreisförmige, rechteckige oder rombusförmige Verteilung modelliert werden, z.B. eine ring-, tropfen- oder nierenförmige Lichtverteilung. Hier liegen zusätzliche gestalterische Freiheiten verborgen, die mit Hilfe der Mikro-Modulationsstruktur 24 ausgeschöpft werden können.

Um die Auswirkungen von Streulicht, das durch die Struktur 24 erzeugt wird, möglichst gering zu halten, kann die Modulationsstruktur 24 so gestaltet werden, dass sie zum Rand einer jeden Lichtleiter-Austrittsfläche 19 hin geringere Abmessungen aufweist, insbesondere bis auf Null abklingt, wie dies bspw. in Figur 16 dargestellt ist. Das heißt, die Abmessungen (bspw. Höhe) der funktionsbestimmenden Strukturen (Wellenberge 26 und Wellentäler 27) klingt zum Rand der Austrittsfläche 19 hin auf Null ab. Dadurch ergibt sich eine klare Separation einzelner Pixel 23 in der Lichtverteilung, die sich auf der Lichteintrittsseite 21 der Sekundäroptik 14 ergibt, ohne dass jedoch eine Gitterstruktur der Pixel 23 erkennbar wäre, wie dies in geringem Maße bei dem bekannten Projektionsmodul 10' der Fall sein kann (vgl. Figur 6). Auch mit zum Rand hin abklingender Struktur 24 erzeugt das erfindungsgemäße Projektionsmodul 10 eine der Lichtverteilung aus Figur 13 entsprechende Lichtverteilung auf der Eintrittsseite 21 der Sekundäroptik 14. Die einzelnen Pixel 23 schließen nahtlos aneinander an. Somit ist die Projektion der Modulations-Struktur 24 sowohl im Pixelinneren als auch an den Pixelgrenzen unauffällig. Alternativ kann die Modulationsstruktur 24 pixelübergreifend gestaltet werden, jedoch auch ohne, dass an den Pixelgrenzflächen 19 extra Stufen entstehen würden, wie dies beispielhaft in den Figuren 14 und 15 dargestellt ist.

Figur 16 zeigt die Lichtaustrittsfläche 19 eines einzelnen Lichtleiters 12. Die darauf eingebrachte Wellenstruktur 24 ist eindimensional nach Art der in Figur 14 gezeigten Wellenstruktur ausgestaltet. Es ist deutlich zu erkennen, dass zum Rand der Austrittsfläche 19 hin die Abmessungen der funktionsbestimmenden Strukturen 26, 27 abnehmen, insbesondere bis auf Null abklingen.

Die vorliegende Erfindung betrifft nicht nur Projektionsmodule 10 mit matrixartigem Ansatz, d.h. einem LED-Array 11 und matrixartig angeordneten Lichtleitern 12 als Primäroptik, sondern auch herkömmliche Projektionsmodule 10 mit einer Gasentladungslampe oder Glühlampe als Lichtquelle 11 und einem Reflektor als Primäroptik 12. Entsprechende Ausführungsbeispiele erfindungsgemäßer Projektionsmodule 10 sind beispielhaft in den Figuren 17 und 18 gezeigt. Dabei ist das Projektionsmodul 10 der Figur 17 zur Erzeugung einer Fernlichtverteilung und das Projektionsmodul 10 der Figur 18 zur Erzeugung einer abgeblendeten Lichtverteilung ausgelegt. Solange die Grundidee der vorliegenden Erfindung, dass in der virtuellen Objektebene der Sekundäroptik 14 eine optisch wirksame Struktur 24 angeordnet oder ausgebildet ist, fallen auch die Projektionsmodule 10 der Figuren 17 und 18 unter die vorliegende Erfindung. Die Primäroptik 12 kann als ein herkömmlicher Spiegel-Reflektor oder als ein TIR (total internal reflection)-Reflektor ausgebildet sein. Die optisch wirksame Struktur 24 ändert die von der Primäroptik 12 geformte örtliche Lichtverteilung nicht, da die Struktur 24 in oder sehr nahe zu der Objektposition der Primäroptik 12 liegt. Die Struktur 24 modifiziert lediglich die Lichtausbreitungsrichtung zwischen Primäroptik 12 und Sekundäroptik 14 derart, dass die abbildende Sekundäroptik 14, die kreisrund oder von einer kreisrunden Form abweichend ausgebildet sein kann, besser, z.B. homogener, ausgeleuchtet wird.

Grundsätzlich bewirkt das Einbringen der Modulationsstruktur 24 in den Strahlengang des von der Primäroptik 12 gebündelten Lichts und das Anordnen der Struktur 24 in der virtuellen Objektebene der Primäroptik 12 eine Vergrößerung des ausgeleuchteten Optik-Bereichs (Fläche 25 innerhalb der gestrichelten Linie 22 in Figur 13) gegenüber dem ohne Modulationsstruktur 24 ausgeleuchtetem Optik-Bereich (Fläche 25' innerhalb der gestrichelten Linie 22' in Figur 6). Das bedeutet, dass vor dem Einsatz der Modulationsstruktur 24 der ausgeleuchtete Bereich 25' im Allgemeinen kleiner sein sollte als der geeignet auszuleuchtende Bereich 25. Am Beispiel einer rhombusförmigen Projektionslinse 14 als Sekundäroptik sollte der beim Einsatz der Mikrostruktur 24 ausgeleuchtete Bereich 25 kleiner als der Rhomben-Beschnitt, d.h. kleiner als die Lichteintrittsfläche 21 der rhombusförmigen Projektionslinse 14 sein. Würde man dies nicht beachten, müsste man einen Verlust an Lichtübertragungseffizienz in dem optischen System 10 in Kauf nehmen. Dennoch könnte eine solche Lösung in bestimmten Situationen erstrebenswert sein, wenn es bspw. darum geht, eine Lichteinkoppelfläche 21 einer beschnittenen Projektionslinse 10 geeignet auszuleuchten.

Nach dem bisherigen Stand der Technik wird versucht, eine homogene Ausleuchtung abbildender Sekundäroptiken 14 mit anderen Mitteln zu erreichen. Eine Modulation von Primäroptik-Auskoppelflächen 19 mittels einer optisch wirksamen, lichtbrechenden Mikrostruktur 24 ist bisher nicht bekannt. Ähnliche Streulichtstrukturen wurden bisher ausschließlich an der Sekundäroptik-Auskoppeloberfläche zu einem anderen Zweck verwendet, nämlich um die Schärfe der Hell-Dunkel-Grenze einer auf der Fahrbahn abgebildeten abgeblendeten Lichtverteilung aufzuweichen und dadurch die lokale Farb- und Ausleuchtungshomogenität auf der Fahrbahn zu verbessern. Bei der vorliegenden Erfindung geht es im Gegensatz dazu jedoch darum, die Akzeptanz des gesamten optischen Systems 10 dadurch zu erhöhen, dass eine nahezu beliebig geformte Lichtdurchtrittsfläche 25 einer als Projektionslinse 14 ausgebildeten Sekundäroptik in gewünschter Weise, z.B. möglichst homogen, vollständig ausgeleuchtet wird. Erfindungsgemäß werden also diejenigen Bereiche einer beliebig geformten Projektionslinse 14, die nicht durch das von der Primäroptik 12 gebündelte Licht ausgeleuchtet werden, auf ein Minimum reduziert bzw. so klein wie möglich gehalten.

## Patentansprüche

1. Scheinwerferprojektionsmodul (10) für ein Kraftfahrzeug zur Erzeugung einer vorgegebenen Lichtverteilung, das Projektionsmodul (10) umfassend:
- eine Lichtquelle (11) zum Aussenden von Licht,
- eine Primäroptik (12) zum Bündeln zumindest eines Teils des ausgesandten Lichts, und
- eine Sekundäroptik (14) zur Projektion zumindest eines Teils des gebündelten Lichts in eine Lichtaustrittsrichtung (3) des Projektionsmoduls (10),
- eine optisch wirksame lichtbrechende Mikrostruktur (24), die im Strahlengang des gebündelten Lichts in einer von der Primäroptik generierten Lichtverteilung angeordnet ist, **dadurch gekennzeichnet, dass**
- die optisch wirksame lichtbrechende Mikrostruktur (24) Abmessungen der funktionsbestimmenden Strukturelemente (26, 27) im Bereich mehrerer 10⁻⁶ m aufweist und dass
- die optisch wirksame lichtbrechende Mikrostruktur (24) in der Objektebene der Sekundäroptik (14) oder in unmittelbarer Nähe der Objektebene der Sekundäroptik (14) angeordnet oder ausgebildet ist, die von der Sekundäroptik (14) auf die Fahrbahn projiziert wird, wobei die optisch wirksame lichtbrechende Mikrostruktur zu einem Aufweiten des Öffnungswinkels des Lichtbündels der Primäroptik führt und so dazu beiträgt, die Lichtdurchtrittsfläche der Sekundäroptik vollständiger und homogener auszuleuchten, wobei die örtliche Modifikation der Primäroptik-Auskoppelrichtung durch die Mikrostruktur in der durch die Sekundäroptik auf die Fahrbahn projizierten resultierenden Lichtverteilung nicht oder nahezu nicht in Erscheinung tritt und die Form und die Abmessung der Lichtverteilung weitgehend ungeändert bleibt.

2. Projektionsmodul (10) nach Anspruch 1, **dadurch gekennzeichnet, dass** die optisch wirksame Struktur (24) als eine eindimensionale Wellenstruktur mit mehreren Wellen ausgebildet ist, wobei Wellenberge (26) und Wellentäler (27) der Wellen durch zylindrische oder quasi-zylindrische Abschnitte gebildet sind und wobei Längsachsen (28) der zylindrischen oder quasi-zylindrischen Abschnitte parallel zueinander verlaufen.

3. Projektionsmodul (10) nach Anspruch 1, **dadurch gekennzeichnet, dass** die optisch wirksame Struktur als eine zweidimensionale Wellenstruktur mit einer ersten Gruppe von Wellen und einer zweiten Gruppe von Wellen ausgebildet ist, wobei Wellenberge (26) und Wellentäler (27) der Wellen durch eine Überlagerung von zylindrischen oder quasi-zylindrischen Abschnitten der beiden Gruppen von Wellen gebildet sind, wobei Längsachsen (30) der zylindrischen oder quasi-zylindrischen Abschnitte der ersten Gruppe von Wellen parallel zueinander verlaufen und Längsachsen (31) der zylindrischen oder quasi-zylindrischen Abschnitte der zweiten Gruppe von Wellen parallel zueinander verlaufen, und wobei die Längsachsen (30, 31) der ersten Gruppe von Wellen und der zweiten Gruppe von Wellen in einem Winkel größer Null Winkelgrad zueinander ausgerichtet sind.

4. Projektionsmodul (10) nach Anspruch 2 oder 3, **dadurch gekennzeichnet**, das die optisch wirksame Struktur (24) derart ausgerichtet ist, dass die Längsachsen (28, 30, 31) der Wellen schräg bezüglich einer Horizontalebene des Projektionsmoduls (10) im in ein Kraftfahrzeug eingebauten Zustand verlaufen.

5. Projektionsmodul (10) nach einem der Ansprüche 1 bis 4, **dadurch gekennzeichnet, dass** die Lichtquelle (11) eine Gasentladungslampe oder eine Glühlampe umfasst.

6. Projektionsmodul (10) nach einem der Ansprüche 1 bis 4, **dadurch gekennzeichnet, dass** die Lichtquelle (11) mindestens eine Halbleiterlichtquelle, insbesondere eine Leuchtdiode, umfasst.

7. Projektionsmodul (10) nach Anspruch 6, **dadurch gekennzeichnet, dass** die Lichtquelle (11) mehrere in einer Reihe oder Spalte neben- oder übereinander oder matrixartig neben- und übereinander angeordnete Halbleiterlichtquellen, insbesondere Leuchtdioden, umfasst.

8. Projektionsmodul (10) nach einem der Ansprüche 1 bis 7, **dadurch gekennzeichnet, dass** die Primäroptik (12) einen Reflektor aufweist.

9. Projektionsmodul (10) nach Anspruch 6 oder 7, **dadurch gekennzeichnet, dass** die Primäroptik (12) mindestens einen Lichtleiter mit einer der Lichtquelle (11) zugewandten Lichteintrittsfläche (18), einer in Lichtaustrittsrichtung (3) gerichteten Lichtaustrittsfläche (19) und zwischen der Lichteintrittsfläche (18) und der Lichtaustrittsfläche (19) ausgebildeten totalreflektierenden Seitenflächen (20) aufweist.

10. Projektionsmodul (10) nach Anspruch 9, **dadurch gekennzeichnet, dass** die Primäroptik (12) mehrere in einer Reihe oder Spalte neben- oder übereinander oder matrixartig neben- und übereinander angeordnete Lichtleiter jeweils mit einer der Lichtquelle (11) zugewandten Lichteintrittsfläche (18), mit einer in Lichtaustrittsrichtung (3) gerichteten Lichtaustrittsfläche (19) und mit zwischen der Lichteintrittsfläche (18) und der Lichtaustrittsfläche (19) ausgebildeten totalreflektierenden Seitenflächen (20) aufweist.

11. Projektionsmodul (10) nach Anspruch 9 oder 10, **dadurch gekennzeichnet, dass** die Lichtaustrittsfläche (19) des mindestens einen Lichtleiters (12) in der Objektfläche der Sekundäroptik (14) liegt.

12. Projektionsmodul (10) nach Anspruch 11, **dadurch gekennzeichnet, dass** die optisch wirksame Struktur (24) auf der Lichtaustrittsfläche (19) des mindestens einen Lichtleiters (12) ausgebildet ist.

13. Projektionsmodul (10) nach Anspruch 9 oder 10, **dadurch gekennzeichnet, dass** die optisch wirksame Struktur (24) auf einem von dem mindestens einen Lichtleiter (12) separaten transparenten Körper ausgebildet ist, der zwischen der Lichtaustrittsfläche (19) des mindestens einen Lichtleiters (12) und der Sekundäroptik (14) angeordnet ist.

14. Projektionsmodul (10) nach Anspruch 13, **dadurch gekennzeichnet, dass** der transparente Körper mit der optisch wirksamen Struktur (24) unmittelbar an die Lichtaustrittsfläche (19) des mindestens einen Lichtleiters (12) angrenzend angeordnet ist.

15. Projektionsmodul (10) nach Anspruch 13 oder 14, **dadurch gekennzeichnet, dass** der transparente Körper mit der optisch wirksamen Struktur (24) aus einem anderen Material als der mindestens eine Lichtleiter (12) besteht, insbesondere aus einem Material mit einer höheren Brechzahl als der mindestens eine Lichtleiter (12).

16. Projektionsmodul (10) nach einem der Ansprüche 12 bis 15, **dadurch gekennzeichnet, dass** die Abmessungen der funktionsbestimmenden Strukturen (26, 27) der auf der Lichtaustrittsfläche (19) des mindestens einen Lichtleiters (12) ausgebildeten optisch wirksamen Struktur (24) zu einem Rand der Lichtaustrittsfläche (19) hin abnehmen, insbesondere auf Null abklingen.

17. Projektionsmodul (10) nach einem der Ansprüche 13 bis 15, **dadurch gekennzeichnet, dass** die Abmessungen der funktionsbestimmenden Strukturen (26, 27) der auf einem dem mindestens einen Lichtleiter (12) zugeordneten Flächenbereich des separaten transparenten Körpers ausgebildeten optisch wirksamen Struktur (24) zu einem Rand des Flächenbereichs hin abnehmen, insbesondere auf Null abklingen.

18. Projektionsmodul (10) nach einem der Ansprüche 1 bis 17, **dadurch gekennzeichnet, dass** die Sekundäroptik (14) mindestens eine Projektionslinse umfasst.

19. Projektionsmodul (10) nach Anspruch 18, **dadurch gekennzeichnet, dass** die mindestens eine Projektionslinse (14) eine von einer Kreisfläche abweichend geformte Lichteintrittsfläche (21) aufweist.

20. Kraftfahrzeugscheinwerfer zur Erzeugung einer vorgegebenen Lichtverteilung, umfassend ein Scheinwerfergehäuse mit einer in Lichtaustrittsrichtung vorgesehenen, durch eine transparente Abdeckscheibe verschlossenen Lichtaustrittsöffnung und mindestens einem in dem Scheinwerfergehäuse angeordneten Projektionsmodul zur Erzeugung zumindest eines Teils der Lichtverteilung, **dadurch gekennzeichnet, dass** das Projektionsmodul nach einem der Ansprüche 1 bis 19 ausgebildet ist.

## Claims

1. Headlamp projection module (10) for a motor vehicle for generating a predetermined light distribution, the projection module (10) comprising:
- a light source (11) for emitting light,
- primary optics (12) for bundling at least a portion of the emitted light, and
- a secondary optics (14) for projecting at least part of the bundled light in a light exit direction (3) of the projection module (10),
- an optically effective refractive microstructure (24), which is arranged in the beam path of the bundled light in a light distribution generated by the primary optics, **characterized in that**
- the optically effective refractive microstructure (24) has dimensions of the function-determining structural elements (26, 27) in the range of several 10-6 m and that
- the optically effective light-refracting microstructure (24) is arranged or formed in the object plane of the secondary optics (14) or in the immediate vicinity of the object plane of the secondary optics (14), which is projected onto the roadway by the secondary optics (14), wherein the optically effective light-refracting microstructure leads to a widening of the opening angle of the light bundle of the primary optics and thereby contributes to illuminate the light passage area of the secondary optics more completely and more homogeneously, whereby the local modification of the primary optic decoupling direction by the microstructure does not or almost does not occur in the resulting light distribution projected onto the roadway by the secondary optics, and the shape and dimensions of the light distribution remain largely unchanged.

2. Projection module (10) according to claim 1, **characterized in that** the optically effective structure (24) is formed as a one-dimensional wave structure with several waves, wherein wave crests (26) and wave troughs (27) of the waves are formed by cylindrical or quasi-cylindrical sections and wherein longitudinal axes (28) of the cylindrical or quasi-cylindrical sections run parallel to one another.

3. Projection module (10) according to claim 1, **characterised in that** the optically effective structure is formed as a two-dimensional wave structure with a first group of waves and a second group of waves, wherein wave crests (26) and wave troughs (27) of the waves are formed by a superposition of cylindrical or quasi-cylindrical portions of the two groups of waves, wherein longitudinal axes (30) of the cylindrical or quasi-cylindrical portions of the first group of shafts extend parallel to one another and longitudinal axes (31) of the cylindrical or quasi-cylindrical portions of the second group of shafts extend parallel to one another, and wherein the longitudinal axes (30, 31) of the first group of shafts and of the second group of shafts are aligned at an angle greater than zero angular degrees to one another.

4. Projection module (10) according to claim 2 or 3, **characterized in that** the optically effective structure (24) is aligned in such a way that the longitudinal axes (28, 30, 31) of the waves run obliquely with respect to a horizontal plane of the projection module (10) in the state installed in a motor vehicle.

5. Projection module (10) according to one of claims 1 to 4, **characterized in that** the light source (11) comprises a gas discharge lamp or an incandescent lamp.

6. Projection module (10) according to one of claims 1 to 4, **characterized in that** the light source (11) comprises at least one semiconductor light source, in particular a light-emitting diode.

7. Projection module (10) according to claim 6, **characterized in that** the light source (11) comprises several semiconductor light sources, in particular light-emitting diodes, arranged in a row or column next to or above one another or in a matrix-like manner next to and above one another.

8. Projection module (10) according to any one of claims 1 to 7, **characterized in that** the primary optics (12) comprises a reflector.

9. Projection module (10) according to claim 6 or 7, **characterized in that** the primary optics (12) comprises at least one light guide with a light entrance surface (18) facing the light source (11), a light exit surface (19) directed in the light exit direction (3) and totally reflecting side surfaces (20) formed between the light entrance surface (18) and the light exit surface (19).

10. Projection module (10) according to claim 9, **characterised in that** the primary optics (12) comprises several light guides arranged in a row or column next to or above one another or in a matrix-like manner next to and above one another, each with a light entry surface (18) facing the light source (11), with a light exit surface (19) directed in the light exit direction (3) and with totally reflecting side surfaces (20) formed between the light entry surface (18) and the light exit surface (19) .

11. Projection module (10) according to claim 9 or 10, **characterized in that** the light exit surface (19) of the at least one light guide (12) lies in the object surface of the secondary optics (14).

12. Projection module (10) according to claim 11, **characterized in that** the optically effective structure (24) is formed on the light exit surface (19) of the at least one light guide (12).

13. Projection module (10) according to claim 9 or 10, **characterized in that** the optically active structure (24) is formed on a transparent body separate from the at least one light guide (12), which is arranged between the light exit surface (19) of the at least one light guide (12) and the secondary optics (14).

14. Projection module (10) according to claim 13, **characterized in that** the transparent body with the optically effective structure (24) is arranged directly adjacent to the light exit surface (19) of the at least one light guide (12).

15. Projection module (10) according to claim 13 or 14, **characterized in that** the transparent body with the optically active structure (24) is made of a different material than the at least one light guide (12), in particular of a material with a higher refractive index than the at least one light guide (12).

16. Projection module (10) according to one of claims 12 to 15, **characterized in that** the dimensions of the function-determining structures (26, 27) of the optically active structure (24) formed on the light exit surface (19) of the at least one light guide (12) decrease towards an edge of the light exit surface (19), in particular decay to zero.

17. Projection module (10) according to one of claims 13 to 15, **characterized in that** the dimensions of the function-determining structures (26, 27) of the optically active structure (24) formed on a surface area of the separate transparent body associated with the at least one light guide (12) decrease towards an edge of the surface area, in particular decay to zero.

18. Projection module (10) according to one of claims 1 to 17, **characterized in that** the secondary optics (14) comprises at least one projection lens.

19. Projection module (10) according to claim 18, **characterized in that** the at least one projection lens (14) has a light entry surface (21) which is shaped differently from a circular surface.

20. Motor vehicle headlamp for generating a predetermined light distribution, comprising a headlamp housing with a light exit opening provided in the light exit direction and closed by a transparent cover lens, and at least one projection module arranged in the headlamp housing for generating at least part of the light distribution, **characterized in that** the projection module is designed according to one of claims 1 to 19.

## Revendications

1. Module de projection de phare (10) pour un véhicule à moteur destiné à produire une distribution de lumière prédéfinie, le module de projection (10) comprenant:
- une source de lumière (11) destinée à émettre de la lumière,
- une optique primaire (12) destinée à focaliser au moins une partie de la lumière émise, et
- une optique secondaire (14) pour la projection d'au moins une partie de la lumière focalisée dans une direction de sortie de lumière (3) du module de projection (10),
- une microstructure réfringente optiquement active (24), qui est disposée dans le chemin optique de la lumière focalisée dans une distribution de lumière générée par l'optique primaire,
**caractérisé en ce que**
- la microstructure réfringente optiquement active (24) présente des dimensions des éléments structuraux à détermination de fonction (26, 27) dans la plage de plusieurs 10⁻⁶ m et que
- la microstructure réfringente optiquement active (24) est disposée ou réalisée dans le plan d'objet de l'optique secondaire (14) ou à proximité immédiate du plan d'objet de l'optique secondaire (14), qui est projeté par l'optique secondaire (14) sur la chaussée, dans lequel la microstructure réfringente optiquement active entraîne un élargissement de l'angle d'ouverture du faisceau lumineux de l'optique primaire et contribue ainsi à éclairer de manière complète et homogène la surface de passage de lumière de l'optique secondaire, dans lequel la modification locale de la direction d'extraction d'optique primaire à travers la microstructure ne se manifeste pas ou quasiment pas dans la distribution de lumière résultante projetée sur la chaussée par l'optique secondaire et la forme et la dimension de la distribution de lumière reste en grande partie inchangées.

2. Module de projection (10) selon la revendication 1, **caractérisé en ce que** la structure optiquement active (24) est réalisée sous la forme d'une structure ondulée unidimensionnelle avec plusieurs ondulations, dans lequel des crêtes d'ondulations (26) et creux d'ondulations (27) des ondulations sont formés par des parties cylindriques ou quasi-cylindriques et dans lequel les axes longitudinaux (28) des parties cylindriques ou quasi-cylindriques s'étendent parallèlement les uns aux autres.

3. Module de projection (10) selon la revendication 1, **caractérisé en ce que** la structure optiquement active est réalisée sous la forme d'une structure ondulée bidimensionnelle avec un premier groupe d'ondulations et un deuxième groupe d'ondulations, dans lequel les crêtes d'ondulations (26) et creux d'ondulations (27) des ondulations sont formés par une superposition de parties cylindriques ou quasi-cylindriques des deux groupes d'ondulations, dans lequel les axes longitudinaux (30) des parties cylindriques ou quasi-cylindriques du premier groupe d'ondulations s'étendent parallèlement les uns aux autres et les axes longitudinaux (31) des parties cylindriques ou quasi-cylindriques du deuxième groupe d'ondulations s'étendent parallèlement les uns aux autres, et dans lequel les axes longitudinaux (30, 31) du premier groupe d'ondulations et du deuxième groupe d'ondulations sont orientés les uns par rapport aux autres selon un angle supérieur à zéro degré d'angle.

4. Module de projection (10) selon la revendication 2 ou 3, **caractérisé en ce que** la structure optiquement active (24) est orientée de telle sorte que les axes longitudinaux (28, 30, 31) des ondulations s'étendent de manière oblique par rapport à un plan horizontal du module de projection (10) dans l'état monté dans un véhicule à moteur.

5. Module de projection (10) selon l'une quelconque des revendications 1 à 4, **caractérisé en ce que** la source de lumière (11) comprend une lampe à décharge ou une lampe à incandescence.

6. Module de projection (10) selon l'une quelconque des revendications 1 à 4, **caractérisé en ce que** la source de lumière (11) comprend au moins une source de lumière à semi-conducteur, en particulier une diode électroluminescente.

7. Module de projection (10) selon la revendication 6, **caractérisé en ce que** la source de lumière (11) comprend plusieurs sources de lumière à semi-conducteur, en particulier diodes électroluminescentes, juxtaposées ou superposées en rangée ou colonne ou juxtaposées et superposées à la façon d'une matrice.

8. Module de projection (10) selon l'une quelconque des revendications 1 à 7, **caractérisé en ce que** l'optique primaire (12) présente un réflecteur.

9. Module de projection (10) selon la revendication 6 ou 7, **caractérisé en ce que** l'optique primaire (12) présente au moins un guide de lumière avec une surface d'entrée de lumière (18) tournée vers la source de lumière (11), une surface de sortie de lumière (19) dirigée dans la direction de sortie de lumière (3) et des surfaces latérales (20) à réflexion totale réalisées entre la surface d'entrée de lumière (18) et la surface de sortie de lumière (19).

10. Module de projection (10) selon la revendication 9, **caractérisé en ce que** l'optique primaire (12) présente plusieurs guides de lumière juxtaposés ou superposés en rang ou colonne ou juxtaposés et superposés à la façon d'une matrice respectivement avec une surface d'entrée de lumière (18) tournée vers la source de lumière (11), avec une surface de sortie de lumière (19) dirigée dans la direction de sortie de lumière (3) et avec des surfaces latérales (20) à réflexion totale réalisées entre la surface d'entrée de lumière (18) et la surface de sortie de lumière (19).

11. Module de projection (10) selon la revendication 9 ou 10, **caractérisé en ce que** la surface de sortie de lumière (19) de l'au moins un guide de lumière (12) se situe dans la surface d'objet de l'optique secondaire (14).

12. Module de projection (10) selon la revendication 11, **caractérisé en ce que** la structure optiquement active (24) est réalisée sur la surface de sortie de lumière (19) de l'au moins un guide de lumière (12).

13. Module de projection (10) selon la revendication 9 ou 10, **caractérisé en ce que** la structure optiquement active (24) est réalisée sur un corps transparent séparé de l'au moins un guide de lumière (12), qui est disposé entre la surface de sortie de lumière (19) de l'au moins un guide de lumière (12) et l'optique secondaire (14).

14. Module de projection (10) selon la revendication 13, **caractérisé en ce que** le corps transparent avec la structure optiquement active (24) est disposé de manière directement adjacente à la surface de sortie de lumière (19) de l'au moins un guide de lumière (12).

15. Module de projection (10) selon la revendication 13 ou 14, **caractérisé en ce que** le corps transparent avec la structure optiquement active (24) est constitué d'un autre matériau que l'au moins un guide de lumière (12), en particulier d'un matériau avec un indice de réfraction plus élevé que l'au moins un guide de lumière (12).

16. Module de projection (10) selon l'une quelconque des revendications 12 à 15, **caractérisé en ce que** les dimensions des structures à détermination de fonction (26, 27) de la structure optiquement active (24) réalisée sur la surface de sortie de lumière (19) de l'au moins un guide de lumière (12) diminuent en direction d'un bord de la surface de sortie de lumière (19), en particulier décroissent jusqu'à zéro.

17. Module de projection (10) selon l'une quelconque des revendications 13 à 15, **caractérisé en ce que** les dimensions des structures à détermination de fonction (26, 27) de la structure optiquement active (24) réalisée sur une zone de surface, associée à l'au moins un guide de lumière (12), du corps transparent séparé, diminuent en direction d'un bord de la zone de surface, en particulier décroissent jusqu'à zéro.

18. Module de projection (10) selon l'une quelconque des revendications 1 à 17, **caractérisé en ce que** l'optique secondaire (14) comprend au moins une lentille de projection.

19. Module de projection (10) selon la revendication 18, **caractérisé en ce que** l'au moins une lentille de projection (14) présente une surface d'entrée de lumière (21) formée de manière différente d'une surface circulaire.

20. Projecteur de véhicule à moteur destiné à produire une distribution de lumière prédéfinie, comprenant un boîtier de projecteur avec une ouverture de sortie de lumière prévue dans la direction de sortie de lumière, fermée par un cabochon transparent, et au moins un module de projection disposé dans le boîtier de projecteur pour produire au moins une partie de la distribution de lumière, **caractérisé en ce que** le module de projection est réalisé selon l'une quelconque des revendications 1 à 19.
